(19) Europäisches Patentamt
European Patent Office
Office européen des brevets

(11) EP 4 118 153 B1

(12) **EUROPÄISCHE PATENTSCHRIFT**

(45) Veröffentlichungstag und Bekanntmachung des Hinweises auf die Patenterteilung:
**24.01.2024 Patentblatt 2024/04**

(21) Anmeldenummer: **21719122.0**

(22) Anmeldetag: **14.04.2021**

(51) Internationale Patentklassifikation (IPC):
***C09D 5/00*** *(2006.01)*

(52) Gemeinsame Patentklassifikation (CPC):
**C09D 5/00**

(86) Internationale Anmeldenummer:
**PCT/EP2021/059697**

(87) Internationale Veröffentlichungsnummer:
**WO 2021/213866 (28.10.2021 Gazette 2021/43)**

(54) **GERUCHS- UND EMISSIONSREDUZIERTES KORROSIONSSCHUTZMITTEL**

ODOR- AND EMISSION-REDUCED ANTI-CORROSION AGENT

AGENT ANTI-CORROSION À ODEURS ET ÉMISSIONS RÉDUITES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2020 DE 102020111288**

(43) Veröffentlichungstag der Anmeldung:
**18.01.2023 Patentblatt 2023/03**

(73) Patentinhaber: **Pfinder KG**
**71032 Böblingen (DE)**

(72) Erfinder:
- **BADER, Mark**
  **73230 Kirchheim (DE)**
- **SCHALLER, Christian**
  **73765 Neuhausen (DE)**
- **GILLMEISTER, Mario**
  **73730 Esslingen (DE)**
- **STAENGLE, Hans-Friedrich**
  **71672 Marbach (DE)**
- **LESSMANN, Karsten**
  **72108 Rottenburg (DE)**

(74) Vertreter: **Witte, Weller & Partner Patentanwälte mbB**
**Postfach 10 54 62**
**70047 Stuttgart (DE)**

(56) Entgegenhaltungen:

| | |
|---|---|
| **WO-A1-98/47855** | **BE-A- 664 018** |
| **CA-A- 751 514** | **GB-A- 961 029** |
| **US-A1- 2014 037 572** | **US-B1- 8 802 801** |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die vorliegende Erfindung betrifft einen Korrosionsschutz für feste Oberflächen.

Insbesondere betrifft die vorliegende Erfindung die Verwendung einer Zusammensetzung zur Herstellung eines geruchs- und emissionsreduzierten Korrosionsschutzmittels zur Hohlraumversiegelung oder zum Unterbodenschutz eines Bauteils, insbesondere eines Kraftfahrzeugbauteils. Die Zusammensetzung weist hierbei ein Harz auf. Das Harz weist mehrere Moleküle auf. Die mehreren Moleküle weisen Moleküle ohne doppelallylische Wasserstoffatome auf. Die Zusammensetzung wird mit einer Nassfilmdicke von 40 $\mu$m bis 1.000 $\mu$m auf dem Bauteil aufgebracht.

Korrosionsschutzmittel, die insbesondere in der Hohlraumkonservierung (HRK) Anwendung finden, also in Hohlräumen, wie sie beispielsweise in Fahrzeugkarosserien vorzufinden sind, sind im Stand der Technik gut bekannt. Hohlraumkonservierungen sind insbesondere aus dem Fahrzeugbau bekannt und bieten nach Applikation, beispielsweise auf einem metallischen Untergrund, einen guten Schutz vor Korrosion, die beispielsweise durch einwirkendes Wasser oder durch feuchte Umgebungsluft ausgelöst wird.

Generell gibt es zwei unterschiedliche Arten von Hohlraumkonservierungen: Flutwachse und Sprühwachse. Im Stand der Technik geläufige Hohlraumkonservierungen zur Sprühapplikation enthalten Wachse und/oder Harze, Funktionsadditive wie beispielsweise Korrosionsschutzadditive, Formulierungsadditive wie beispielsweise Rheologie- oder Dispergierhilfsmittel und anorganische Füllstoffe. Diese Bestandteile sind entweder in einem wässrigen Medium (wässrige Hohlraumkonservierung) oder einem nicht polaren organischen Lösungsmittel (Lösungsmittel enthaltende Hohlraumkonservierung) dispergiert. Weiterhin finden sich noch sogenannte 100 % Hohlraumkonservierungen ohne Lösungsmittel.

Um eine gleichmäßige Verteilung der eingesprühten Hohlraumkonservierung in die Bauteile zu erreichen, werden im Allgemeinen Produkte mit niedriger Viskosität verwendet, um eine gleichmäßige Benetzung der Bauteiloberfläche und eine gute Penetration von Falzen zu erzielen. Hierbei sind zum einen niedrige Viskositäten notwendig, um die gleichmäßige Benetzung bestmöglich zu erzielen, zum anderen soll, nachdem alle relevanten Stellen der Bauteile benetzt sind, die Hohlraumkonservierung aufhören fließfähig zu sein, um ein Austropfen der Hohlraumkonservierung aus den Applikationsdüsen-öffnungen der Bauteile zu verhindern. Je nach Bauteil wird eine niedrigere bzw. höhere Viskosität benötigt, um das Verlaufen der Hohlraumkonservierung im gesamten Bauteil zu ermöglichen. Da aber eine individuelle Einstellung der Rheologie im Allgemeinen nicht möglich ist, wird eine durchschnittliche Rheologie des Materials gewählt, so dass die Bauteile möglichst komplett benetzt werden und es trotzdem zu keinem Austropfen kommt.

Die notwendige Erhöhung der Viskosität nach Applikation wird bei Lösungsmittel enthaltender Hohlraumkonservierung und wässriger Hohlraumkonservierung durch Verdunsten des Mediums, mithin des Lösungsmittels oder Wasser, erzielt. Bei 100 % Hohlraumkonservierungen erfolgt diese Erhöhung der Viskosität durch eine Temperaturerhöhung (beispielsweise 1 min bei 60 °C). Diese Temperaturerhöhung löst eine Gelierung der Hohlraumkonservierung nach Abkühlung aus, den sogenannten Drop-Stop, wodurch das Austropfen der Hohlraumkonservierung verhindert wird und somit Prozesssicherheit garantiert ist. Nachteilig hierbei ist, dass durch den Einsatz von Öfen Energie- und Investitionskosten für den Kunden bzw. Erstausrüstung (OEM) entstehen, darüber hinaus ist es schwierig, eine über alle Schichtdicken konstante Temperaturerhöhung zu gewährleisten.

Nach Verdunsten des Mediums bzw. Gelieren der Hohlraumkonservierung bildet sich auf der beschichteten Oberfläche ein vor Korrosion schützender Film aus. Im weiteren Verlauf der Funktionsweise der Hohlraumkonservierung ist eine gute Wärmestandfestigkeit notwendig, so dass bei Wiedererwärmung des Bauteils die verfilmte Hohlraumkonservierung nicht erneut flüssig wird bzw. auslaufen kann und die Festigkeit der Korrosionsschutzfilme in einem Bereich von -20 bis +90 °C gegeben ist. Die Wärmestandfestigkeit wird bei Lösungsmittel enthaltenden Hohlraumkonservierungen und 100 % Hohlraumkonservierungen im Allgemeinen durch chemische Vernetzung enthaltender Komponenten erzielt, wie beispielsweise der oxidativen Vernetzung bzw. Trocknung von Alkydharz, die in einem Zeitraum von ca. drei bis fünf Tagen vollständig abläuft.

Insgesamt betrachtet handelt es sich bei der Applikation der Hohlraumkonservierung um einen Zweistufenprozess: 1. Zielgerichtete Applikation und unmittelbares Verfließen mit ausreichender Penetration der Hohlraumkonservierung und einer gegebenenfalls kontrollierbaren Viskositätserhöhung und 2. chemische Vernetzung während/nach der Viskositätserhöhung, um eine langfristige Wärmestandfestigkeit zu bewirken.

Diese lange Trocknungs- bzw. Vernetzungsdauer, eine oftmals nicht vollständige Durchtrocknung und die durchschnittliche Rheologie des Materials für alle einzelnen Einstechlöcher bzw. Setzpunkte sind nachteilig in herkömmlichen 100 % Hohlraumkonservierungen. Aus diesem Grund werden oftmals Tropfstrecken zum kontrollierten Austropfen von nicht getrockneter Hohlraumkonservierung benötigt und Bauteile, wie beispielsweise Schweller, werden abgeklebt. Dies erhöht die Verfahrenskosten für die Konservierung und erfordert häufig eine manuelle Nachbehandlung zur Entfernung von Resten der Hohlraumkonservierung. Ein weiterer Nachteil dieser oxidativ vernetzenden Hohlraumkonservierungen (Lösungsmittel enthaltende Hohlraumkonservierungen und 100 % Hohlraumkonservierungen) besteht in der Bildung von Spaltprodukten. Das sind in der Hauptsache $C_5$ bis $C_9$-Aldehyde und die daraus durch Oxidation entstehenden entsprechenden Carbonsäuren, welche in dem Fahrzeuginnenraum zur Gesamtemission sowie dem Geruch

beitragen können. Hierfür gibt jeder Erstausrüster strenge Grenzwerte vor, die zum Teil nur schwer zu erreichen sind.

Eine dabei auftretende Schwierigkeit besteht darin, dass eine einfache Applizierbarkeit und eine gute Wärmestandfestigkeit eines Korrosionsschutzmittels, beispielsweise eines Korrosionsschutzmittels zur Hohlraumkonservierung oder für den Unterbodenschutz, lediglich dadurch garantiert werden kann, indem ein Einkomponentengemisch für die Vernetzungsreaktion angestrebt wird. Die heutzutage eingesetzte, vor allem auf Alkydharz basierende Technologie verursacht aber Emissionen und Geruch. Andere Bindemitteltechnologien erfüllen bisher jedoch die notwendigen Kriterien wie ein Einkomponenten-System, Kennzeichnungslosigkeit, Lagerstabilität, eine Vernetzung bei Raumtemperatur, etc., nicht oder bestenfalls teilweise. Die US 2014/0037572 A1 betrifft anti-Fouling-Beschichtungen aus einem polymerisierbaren Organoboralkylharz. Die US 8,802,801 B1 betrifft eine rekonfigurierbare und selbstheilende Polymerbeschichtung. Die WO 98/47855 A betrifft ein Verfahren zur Modifizierung von ungesättigten Fettsäureesterbeständen, daraus resultierende Produkte und deren Verwendung. Die GB 961 029 A betrifft Zusammensetzungen zur Oberflächenbeschichtung. Die CA 751 514 A betrifft eine wässrige Emulsion für die Abscheidung eines elektrophoretischen Films. Die BE 664 018 A betrifft Überzugsgemische aus Monoepoxyalkoholverbindungen.

Daher besteht die Aufgabe der vorliegenden Erfindung eine Zusammensetzung bereitzustellen, die zur Herstellung eines geruchs- und emissionsreduzierten Korrosionsschutzmittels zur Hohlraumversiegelung oder zum Unterbodenschutz eines Bauteils verwendet werden kann. Weiterhin soll die Verwendung einer Zusammensetzung zur Herstellung eines geruchs- und emissionsreduzierten Korrosionsschutzmittels zur Hohlraumversiegelung oder zum Unterbodenschutz eines Bauteils bereitgestellt werden, bei denen die vorstehend genannten Schwierigkeiten gelöst sind. Eine weitere Aufgabe der vorliegenden Erfindung besteht in der Bereitstellung einer Verwendung bei denen verringerte Emission und insbesondere reduzierte Geruchsentwicklung auftreten. Noch eine weitere Aufgabe besteht in der Bereitstellung einer Verwendung einer ein Polyesterharz und/oder ein Alkydharz enthaltenden Zusammensetzung zur Herstellung eines geruchs- und emissionsreduzierten Korrosionsschutzmittels zur Hohlraumversiegelung oder zum Unterbodenschutz eines Bauteils, wobei die Zusammensetzung eine erhöhte Stabilität aufweist.

Erfindungsgemäß werden die vorstehend genannten Aufgaben durch die Verwendung einer Zusammensetzung zur Herstellung eines geruchs- und emissionsreduzierten Korrosionsschutzmittels zur Hohlraumversiegelung oder zum Unterbodenschutz eines Kraftfahrzeugbauteils gemäß Anspruch 1 gelöst.

Bei einem doppelallylisches Wasserstoffatom, befindet sich ein Wasserstoffatom in Allylstellung zu zwei Doppelbindungen. Das zugrundeliegende Strukturmerkmal weist somit zwei Doppelbindungen und eine dazwischen liegende CHR Gruppe auf, wobei R H oder ein beliebiger anderer Rest sein kann. Der einfachste beispielhafte Vertreter einer Verbindung mit einem doppelallylischen Wasserstoffatom stellt 1,4-Pentadien dar. Ein weiterer beispielhafter Vertreter einer Verbindung mit einem doppelallylisches Wasserstoffatom ist Linolsäure oder ein Linolsäureester.

Es wurde gefunden, dass Moleküle bzw. Moleküle mit einem doppelallylischen Wasserstoffatom gegenüber der bei der oxidativen Vernetzung auftretenden Spaltung in u.a. kurzkettige Aldehyde besonders empfänglich sind. Dem kann dadurch entgegengetreten werden, dass die Zahl der Moleküle mit mindestens einem doppelallylischen Wasserstoffatom verringert wird. Dies erfolgt vorzugsweise dergestalt, dass gleichzeitig die Vernetzungsfähigkeit erhalten bleibt und mithin die Zahl der (quer) vernetzenden Doppelbindungen nicht verringert wird. Diese (quer) vernetzenden Doppelbindungen sind damit in Form isolierter und/oder kumulierter Doppelbindungen in dem Harz enthalten.

Die "Zusammensetzung zur Herstellung eines geruchs- und emissionsreduzierten Korrosionsschutzmittels zur Hohlraumversiegelung oder zum Unterbodenschutz eines Bauteils", im Rahmen der vorliegenden Anmeldung auch als "Korrosionsschutzmittel" bezeichnet, zeichnet sich dadurch aus, dass das darin enthaltene Harz aufgrund eines geringen Gehalts an doppelallylischen Wasserstoffatomen, geruchs- und emissionsreduzierte Eigenschaften aufweist.

Wie bereits vorstehend erwähnt kann ein geringer Gehalt an doppelallylischen Wasserstoffatomen auf mehrere Arten erreicht werden. Zum einen ist es möglich ein oder mehrere Harze einzusetzen, die von vornherein keine doppelallylischen Wasserstoffatome aufweisen, sondern lediglich andere einer Vernetzung zugängliche Gruppen, bspw. isolierte und/oder kumulierte C-C Doppelbindungen. Darüberhinaus kann der Anteil an einem oder mehreren Harzen mit doppelallylischen Wasserstoffatomen dadurch verringert werden, dass entweder ein oder mehrere Harze ohne doppelallylische Wasserstoffatome (auch Moleküle ohne doppelallylische Wasserstoffatome) hinzugegeben werden.

Alternativ, oder zusätzlich, kann das eine oder die mehreren Harze mit doppelallylischen Wasserstoffatomen (Moleküle) einer chemischen Reaktion unterzogen werden. Durch diese chemische Reaktion werden die doppelallylischen Wasserstoffatome entfernt (bzw. der Gehalt an doppelallylischen Wasserstoffatomen in dem Harz wird verringert), wobei vorzugsweise gleichzeitig die Zahl an Doppelbindungen nicht oder lediglich geringfügig verringert wird, damit eine ausreichende Quervernetzungsfähigkeit erhalten bleibt. Ein bevorzugtes Beispiel einer derartigen chemischen Reaktion stellt die Diels-Alder Reaktion bereit, in der eine oder beide C-C Doppelbindungen, die in einer Gruppe mit einem doppelallylischen Wasserstoffatom enthalten sind, als Dienophil mit einem Dien, bspw. Cyclopentadien, zur Reaktion gebracht wird.

Mithin kann im Rahmen der vorliegenden Erfindung die Entstehung geruchsintensiver Verbindungen, insbesondere kurzkettiger Aldehyde bzw. Carbonsäuren, insbesondere von Aldehyden bzw. Carbonsäuren mit 3 bis 9 C-Atomen, wie beispielsweise 4 bis 8 C-Atomen, 5 bis 7 C-Atomen, oder 6 C-Atomen, teilweise, vorzugsweise vollständig,

unterbunden werden und damit zu einer Emissionsverringerung beigetragen werden.

Im Rahmen der vorliegenden Erfindung wurde weiterhin gefunden, dass das substituierte oder unsubstituierte 1,3-Butadien, im Folgenden auch Dien genannt, im Rahmen einer Diels-Alder-Reaktion mit einer Doppelbindung oder einer Dreifachbindung der ungesättigten Verbindung, des ersten Moleküls, reagiert. Diese Doppelbindung oder Dreifachbindung der ungesättigten Verbindungen fungiert hierbei als Dienophil. Das durch die [4+2] Cycloaddition des Diens an das Dienophil entstehende Ringsystem weist eine Doppelbindung (Addition des Diens an eine Doppelbindung) oder zwei isolierte Doppelbindungen (Addition des Diens an eine Dreifachbindung) auf. Es ist davon auszugehen, dass diese Doppelbindung(en) zu einer weiteren oxidativen Vernetzung des ersten Moleküls beitragen können. Da die im Rahmen der Diels-Alder-Reaktion entstehenden Doppelbindung(en) in einem Ringsystem (einem substituierten Cyclohexen oder substituierten 1,4-Cyclohexadien) vorliegen, können auch bei einer sich anschließenden oxidativen Spaltung einer Doppelbindung keine kurzkettigen Aldehyde auftreten, die zu der Emissions- und Geruchs-Entwicklung beitragen.

Zusammenfassend haben die Erfinder erkannt, dass durch die Verringerung der Zahl an Molekülen mit mindestens einem doppelallylischen Wasserstoffatom die mit Emissionen und Geruchsbelästigungen verbundene oxidative Spaltungsreaktion zumindest teilweise, vorzugsweise vollständig, unterbunden werden kann ohne die räumliche Vernetzung des Korrosionsschutzmittels zu beinträchtigen oder gar zu verhindern. Darüberhinaus kann davon ausgegangen werden, dass aufgrund des verminderten Anteils oder der Abwesenheit von kurzkettigen Aldehyden/Carbonsäuren im Vergleich zu herkömmlichen Korrosionsschutzbeschichtungen eine höhere Homogenität innerhalb des Korrosionsschutzmittels vorliegt. Dies führt zu einer höheren Stabilität und einer längeren Lebensdauer der Beschichtung.

Harze, die in Zusammensetzungen zur Herstellung eines geruchs- und emissionsreduzierten Korrosionsschutzmittels zur Hohlraumversiegelung oder zum Unterbodenschutz eines Bauteils zum Einsatz gelangen, sind im Stand der Technik bekannt.

Bei dem Harz kann es sich beispielsweise um einen ungesättigten Polyester, ein ungesättigtes Alkydharz und/oder ein ungesättigtes Bindemittel handeln. Vorzugsweise können feuchtigkeitshärtende Präpolymere der vorstehend genannten Bestandteile und Mischungen davon zum Einsatz gelangen. Besonders bevorzugt handelt es sich bei dem Harz um ein ungesättigtes Alkydharz. Vorzugsweise handelt es sich bei dem Harz um ein modifiziertes Harz, das eine geringere Anzahl doppelallylisches Wasserstoffatome als ein nicht-modifiziertes Harz aufweist.

Weiter bevorzugt handelt es sich bei dem Harz um eine mittel- bis langkettige organische Verbindung, die zumindest eine funktionelle Gruppe aufweist, die ausgewählt ist aus der Gruppe bestehend aus einer Amino-Gruppe, einer Carboxy-Gruppe und einer Hydroxy-Gruppe. Bevorzugte Beispiele für solche Verbindungen sind Alkydharze, Acrylharze, Polyester und native und synthetische Öle mit OH-Funktionalität.

Weiter bevorzugt handelt es sich bei dem Harz um eine organische Verbindung, die zumindest eine funktionelle Gruppe aufweist, die ausgewählt ist aus der Gruppe bestehend aus einer Amino-Gruppe, einer Carboxy-Gruppe und einer Hydroxy-Gruppe. Bevorzugte Beispiele für solche Verbindungen sind Alkydharze, Acrylharze, Polyester und native und synthetische Öle mit OH-Funktionalität.

Insbesondere bevorzugt handelt es sich bei dem Harz, um einen Ester einer ungesättigten Fettsäure. Bevorzugt kann dieser Ester von einem mehrwertigen Alkohol abgeleitet sein, weiter bevorzugt von zweiwertigen Alkoholen (wie Ethylenglycol, Butandiol, Pentandiol, Hexandiol, Heptandiol, Neopentylglycol, Dietylenglycol und/oder Triethylenglykol), dreiwertigen Alkoholen (wie Glycerin, Trimetylolethan und/oder Trimethylolpropan), vierwertigen Alkoholen (wie Pentaerythrit), oder sechswertigen Alkoholen (wie Dipentaerythrit) oder Mischungen davon. Besonders bevorzugt kann der Ester von einer ungesättigten Fettsäure von Glycerin abgeleitet sein. Bevorzugt kann der von Glycerin abgeleitete Ester einer ungesättigten Fettsäure ein Triglycerid einer ungesättigten Fettsäure sein.

Der Begriff "Triglycerid", wie hierin verwendet, bezeichnet dreifache Ester des dreiwertigen Alkohols Glycin mit einer organischen Carbonsäure. Die organischen Carbonsäuren können gleich oder voneinander verschieden sein. Somit können die Triglyceride drei gleichartige oder voneinander verschiedene Estergruppen aufweisen.

Die organische Carbonsäure ist vorzugsweise eine Fettsäure, insbesondere eine aliphatische Monocarbonsäure mit etwa 4 bis etwa 36 Kohlenstoffatomen, bevorzugt etwa 8 bis etwa 24 Kohlenstoffatomen, stärker bevorzugt etwa 12 bis etwa 20 Kohlenstoffatomen. Dabei können die Fettsäuren unverzweigt oder verzweigt sein, wobei unverzweigte Fettsäuren bevorzugt sind.

Gemäß der vorliegenden Erfindung ist mindestens eine der organischen Carbonsäuren eine ungesättigte Fettsäure. Die ungesättigte Fettsäure kann eine oder mehrere ungesättigte Bindungen aufweisen, beispielsweise eine bis sechs ungesättigte Bindungen. Besonders bevorzugt liegen die ungesättigten Bindungen als konjugierte Doppelbindungen vor.

Mögliche einfach ungesättigte Fettsäuren sind Undecylensäure, Myristoleinsäure, Palmitoleinsäure, Margaroleinsäure, Petroselinsäure, Ölsäure, Elaidinsäure, Vaccensäure, Gadoleinsäure, Gondosäure, Cetoleinsäure, Erucasäure und Nervonsäure. Mögliche mehrfach ungesättigte Fettsäuren sind Linolsäure, Calendulasäure, Punicinsäure, Eleostearinsäure, Stearidonsäure, Arachidonsäure, Eicosapentaensäure, Docosadiensäure, Docosatetraensäure, Docosapentaensäure, Docosahexaensäure, Tetracosahexaensäure. Weitere bevorzugte Säuren sind Pelargonsäure, Tallöl-Fettsäuren, Benzoesäure, p-tert-Butylbenzoesäure, Versatic-Säuren, Abietinsäure, Stearinsäure, Isononansäure,

Laurinsäure, Milchsäure, Ölsäure, Linolensäure, Palmitoleinsäure, Gadoleinsäure, Eleostearinsäure, Oxoeleostearinsäure, Erucasäure, Gondosäure, Nervonsäure, Ricinolsäure, Eicosapentaensäure, Docosahexaensäure, Docosapentensäure, Stearidonsäure und Mischungen davon.

Der Ester einer ungesättigten Fettsäure kann auch bevorzugt in Form eines natürlichen Öls eingesetzt werden. Als natürliche Öle werden Öle bezeichnet, welche aus Pflanzen oder Tieren wie Fischen erhalten werden können. Dies ist besonders bevorzugt, da diese Verbindungen aus nachwachsenden Rohstoffen erhalten werden und somit im Hinblick auf den Umweltschutz vorteilhaft sind. Bevorzugte Pflanzenöle sind beispielsweise Leinöl, Rizinusöl, Sojaöl, Erdnussöl, Sonnenblumenöl, Distelöl, Rapsöl, Tungöl, Oiticikaöl, Baumwollsamenöl, Maisöl, Safloröl, Holzöl, Rüböl, Perillaöl, Mohnsamenöl, Rizineenöl, Sesamöl, Weizenkeimöl, Hanföl, Traubenkernöl, Walnussöl, Lackleinöl, Johannisbeerkernöl, Perillasamenöl oder Wildrosenöl.

Die genannten Harze haben den Vorteil, dass diese einfach (chemisch) modifiziert werden können und dadurch für den Einsatz in einer Zusammensetzung zur Herstellung eines geruchs- und emissionsreduzierten Korrosionsschutzmittels zur Hohlraumversiegelung oder zum Unterbodenschutz eines Bauteils optimiert werden können. Beispielsweise kann ein Alkydharz mit doppelallylischem Wasserstoffatom als erste Komponente mit einer zweiten Komponente, wobei die zweite Komponente ein substituiertes oder unsubstituiertes 1,3-Butadien ist, unter Bildung eines Diels-Alder-Produkts umgesetzt werden. Bei der Reaktion wird mindestens eine Doppelbindung der ersten Komponente als Dienophil im Rahmen einer Diels-Alder-Reaktion mit einem substituierten oder unsubstituierten 1,3-Butadien, der zweiten Komponente, reagiert.

Das Harz, bspw. ein Alkydharz, besteht aus mehreren Molekülen. Ein Verhältnis der Moleküle mit mindestens einem doppelallylischen Wasserstoffatom bezogen auf eine Gesamtzahl der mehreren Moleküle ist dabei $\leq 10^{-2}$, vorzugsweise $\leq 10^{-3}$, bspw. $\leq 10^{-4}$, $\leq 10^{-5}$, $\leq 10^{-6}$, $\leq 10^{-6}$. Weiter bevorzugt ist kein oder beinahe kein doppelallylisches Wasserstoffatom enthalten. Beinahe kein doppelallylisches Wasserstoffatom betrifft ein Verhältnis von bspw. $\leq 10^{-3}$ bis $\geq 10^{-6}$, vorzugsweise $\leq 5*10^{-4}$ bis $\geq 5*10^{-5}$, oder $\leq 10^{-4}$ bis $\geq 10^{-5}$.

Die Zahl der Moleküle bzw. Moleküle mit einem doppelallylischen Wasserstoffatom wird vorzugsweise im Rahmen einer Diels-Alder Reaktion verringert. Die Moleküle mit einem doppelallylischen Wasserstoffatom sind hierbei erste Moleküle, die mit zweiten Molekülen zur Reaktion gebracht werden.

Bei den zweiten Molekülen handelt es sich bevorzugt um ein substituiertes oder unsubstituiertes Cyclopentadien (CPD) oder um ein substituiertes oder unsubstituiertes Dicyclopentadien (DCPD). Reagiert das CPD oder DCPD mit der ersten Komponente wird die spaltbare Doppelbindung unter gleichzeitiger Einbringung einer Doppelbindung im Diels-Alder-Produkt, welche noch oxidativ vernetzt werden kann, blockiert.

Das erhaltene Diels-Alder-Produkt bietet den Vorteil, dass in einer Folgereaktion, insbesondere in einer oxidativen Vernetzung, keine Aldehyde gebildet werden, die emittiert werden und für die Geruchsbildung des Korrosionsschutzmittels verantwortlich sind. Mit dem erfindungsgemäßen Korrosionsschutzmittel wird daher die Entstehung von Spaltprodukten verringert bzw. ggf. vollständig vermieden, insbesondere von kurzkettigen geruchsintensiven Spaltprodukten.

Eine bevorzugte Möglichkeit die Zahl an Molekülen mit mindestens einem doppelallylischen Wasserstoffatom zu verringern besteht in einer vorgeschalteten Diels-Alder-Reaktion, die zu einem Diels-Alder-Produkt führt, welches in einer oxidativen Spaltung der weiterhin ungesättigten Verbindung umgesetzt werden kann.

Die Zusammensetzung zeichnet sich hierbei dadurch aus, dass bei der oxidativen Vernetzung des Diels-Alder-Produkts auftretende Emissions- bzw. Geruchsentwicklung zumindest teilweise verringert, vorzugsweise vollständig eliminiert, werden kann.

Durch die oxidative Vernetzung des erfindungsgemäßen Diels-Alder-Produkts wird somit eine Beschichtung erreicht, die sich durch eine höhere Stabilität gegenüber herkömmlichen oxidative vernetzten Bindemittelsystemen für Korrosionsschutzmittel auszeichnet. Dies ist mutmaßlich darauf zurückzuführen, dass die Entstehung kurzkettiger Abbauprodukte, insbesondere der vorstehend erwähnten kurzkettigen Aldehyde bzw. Carbonsäuren, unterbunden bzw. stark eingeschränkt wird, so dass eine Beschichtung von gleichmäßigem Aufbau bzw. höherer Homogenität erhalten wird.

Es ist klar, dass verschiedene erste Moleküle und/oder verschiedene zweite Moleküle zur Verwendung gelangen können. Vorzugsweise kommen verschiedene erste Moleküle und ein Typ eines zweiten Moleküls, bspw. Diyclopentadien, zur Verwendung.

Im Rahmen der vorliegenden Erfindung kommen mehr bevorzugt als erste Moleküle mehrfach ungesättigt Polyester, insbesondere mehrfach ungesättigte Alkydharze, zur Anwendung, deren Zusammensetzung, Reaktivität und Reaktionsverhalten dem Fachmann geläufig ist.

Häufig werden Dicarbonsäuren, wie bspw. Phthalsäure, Phthalsäureanhydrid, Isophthalsäure verwendet. Dadurch erhalten Alkydharze eine größere Härte und Beständigkeit gegen Hitze und Chemikalien.

Aliphatische Dicarbonsäuren erhöhen die Elastizität des Korrosionsschutzmittels. Hierzu können eines oder mehrere von Bernsteinsäure, Adipinsäure, Azelainsäure, 2,2,4-Trimethyladipinsäure, Sebacinsäure, Dodecandicarbonsäure oder dimerisierte Fettsäuren eingesetzt werden. Flammhemmende Eigenschaften können durch den Zusatz halogenhaltiger Dicarbonsäuren erzielt werden.

Als Polyol wird vorzugsweise Glycerol eingesetzt. Mehr bevorzugt, wird Glycerol beispielsweise mit einem oder mehreren von Pentaerythrit, Dipentaerythrit, Trimethylpropan, Trimethylolethan, Sorbitol oder Glycolen kombiniert. Dadurch können hohe Molmassen und somit hohe Viskositäten, schnelle Trocknung oder höhere Härten erzielt werden.

Die Fettsäuren in den Alkydharzen beeinflussen die Eigenschaften durch ihre Menge sowie die Anzahl ihrer Mehrfachbindungen. Ein hoher Anteil ungesättigter Bindungen führt zu schneller Trocknung und hohem Glanz, jedoch nur geringer Lichtbeständigkeit. Zunehmende Fettsäuremengen senken Polymerisations- und Verzweigungsgrad, Viskosität, Trocknungsgeschwindigkeit und Härte. Sie erhöhen die Löslichkeit in organischen Lösungsmitteln, bspw. Benzin, und die Witterungsstabilität. Die Säuren werden in Form ihrer Fette oder Öle zugesetzt und daher einer Umesterung unterworfen.

Je nach Fettsäuregehalt wird im Stand der Technik zwischen kurzöligen (22 % bis 40 %), mittelöligen (40 % bis 60 %) und langöligen (60% bis 70 %) Alkydharzen unterschieden.

Beispielhafte Verfahren zur Herstellung von Alkydharzen umfassen die Schmelzkondensation von Polyol, Dicarbonsäure und Fettsäure bei Temperaturen von 200 °C bis 240 °C unter Wasserabspaltung ohne Katalysator. Ferner kann eine zweistufige Umesterung der natürlichen Fettsäuren erfolgen. Zunächst werden die Fettsäureglyceride mit einem Polyol, bspw. Glycerol, bei 240 °C bis 280 °C in Gegenwart eines Katalysators, wie z.B. Erdalkalimetall-Alkoholat umgesetzt. Als Zwischenprodukt entstehen Monoglyceride, die in einer zweiten Stufe bei 200 °C bis 300 °C unter Inertgas mit der Dicarbonsäure umgesetzt werden. Auch der umgekehrte Weg ist möglich: Besonders, wenn schwer lösliche Carbonsäuren wie Iso- und Terephthalsäure verarbeitet werden, wird im ersten Schritt das Fett mit der Carbonsäure umgesetzt, die gleichzeitig als saurer Katalysator dient. Darauf folgt dann die Kondensation mit dem Polyol. Alkydharze werden auch durch Azeotropdestillation, meistens in Xylol, hergestellt. Durch Copolymerisation, Umsetzung oder Vermischung mit anderen Substanzen können die Eigenschaften der Alkydharze modifiziert werden. Naturharze verbessern z.B. Glanz und Haftung, Phenolharze erhöhen die Wasserbeständigkeit, Styrol verbessert Trocknung und Chemikalienbeständigkeit, Epoxide die Korrosionsbeständigkeit, Silikon Farbton-, Glanz- und Temperaturstabilität und Diisocyanate Trocknung, Härte und Abriebfestigkeit.

Die Harze, bspw. ungesättigte Polyester, vorzugsweise ungesättigte Alkyde oder Alkydharze, können im Rahmen einer oxidativen Vernetzungsreaktion, vorzugsweise unter Anwesenheit von Luftsauerstoff bei erhöhten Temperaturen, untereinander verknüpfen, um auszuhärten. Die durch räumliche Vernetzung der Alkyde entstehenden Alkydharze sind gemäß dem Römpp Chemie Lexikon, Georg Thieme Verlag Stuttgart, 9. erweiterte und neubearbeitete Auflage 1989 Alkydharze mit natürlichen Fetten und Ölen und/oder synthetischen Fettsäuren modifizierte Polyesterharze. Sie werden durch die Veresterung mehrwertiger Alkohole, von denen mindestens einer dreiwertig ist, mit mehrbasischen Carbonsäuren hergestellt. Ebenso können auch Fettsäure-freie Polyester aus Phthalsäure(anhydrid) und Glycerin als Alkydharze angesehen werden.

Die oxidative Vernetzung oder (Quer-) Vernetzung ist eine Reaktion, die gewöhnlich bei der Trocknung/Aushärtung der Zusammensetzung stattfindet. Die Reaktion wird ausgelöst durch Sauerstoff, vorzugsweise Luftsauerstoff, oder eine Sauerstoff-enthaltende chemische Verbindung, die der Zusammensetzung hinzugegeben wird und die den Sauerstoff kontrolliert, bspw. im Rahmen eines Erwärmens der Verbindung, freigibt.

Dabei wird unter "Trocknen" sowohl verstanden, dass man das Korrosionsschutzmittel ohne besonderen chemischen oder physikalischen Umgebungsbedingungen "trocknen lässt", also bspw. indem man das Korrosionsschutzmittel bei Raumtemperatur und ohne besondere oder geänderte Luftumgebung trocknen lässt. Andererseits wird unter "Trocknen" aber auch ein forciertes Trocknen verstanden, also bspw. indem man das Korrosionsschutzmittel unter erhöhter Temperatur zum Trocknen bringt.

Im Folgenden zeigt Reaktionsschema 1 eine schematische Darstellung der oxidativen Vernetzung eines Alkyds, namentlich eines Linolsäureesters, wobei der Esterrest mit R dargestellt ist. Es ist klar, dass diese schematische Darstellung lediglich als Beispiel dient und jedes beliebige ungesättigte Alkydharz oder eine Mischung verschiedener Alkydharze verwendet werden kann. Im Rahmen der oxidativen Vernetzung beschreibt (1) die eigentliche Oxidation mit $O_2$, (2) die Initiierung durch ein Me(II)-Salz, beispielsweise ein Co(II)-Salz wie Cobaltdichlorid, (3) die Kettenfortpflanzung mit einem weiteren Linolsäureestermolekül, und (4) die Terminierungsreaktion.

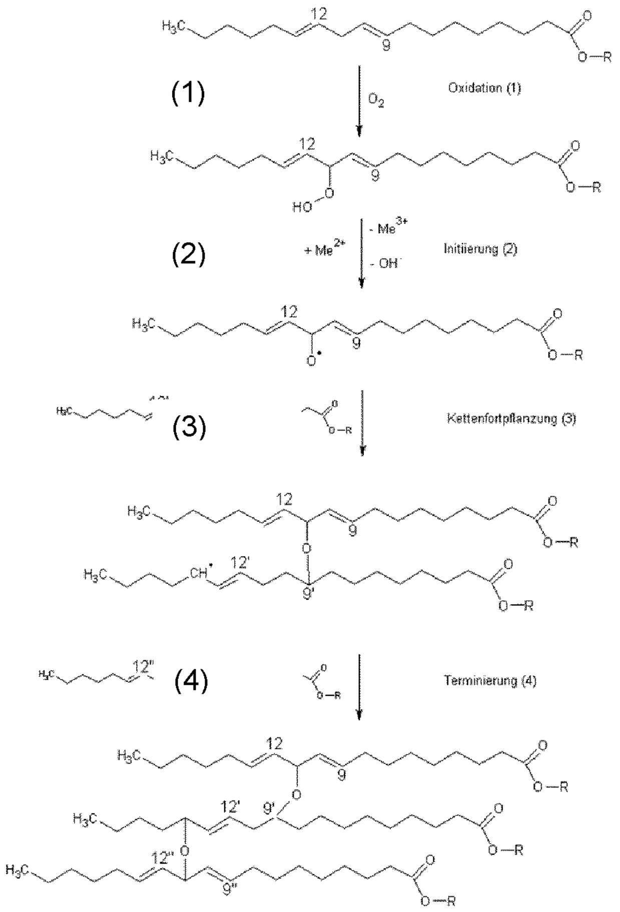


<u>Reaktionsschema 1:</u> Beispielhafte Darstellung der oxidativen Vernetzung eines Alkydharzes anhand eines Linolsäureesters.

In Reaktionsschema 2 wird anhand des vorstehend genannten Linolsäureesters (mit dem Esterrest R) die Entstehung der unerwünschten Spaltprodukte, insbesondere der kurzkettigen geruchsintensiven Spaltprodukte; eines Alkydharzes bei oxidativer Vernetzung aufgezeigt. (1) zeigt hierbei die Anlagerung von $O_2$ an ein Linolsäureestermolekül, (2) die Bildung eines freien Radikals durch die Abspaltung eines OH-Radikals, und (3) die anschließende Spaltung in ein kurzkettiges Aldehyd und einen Ester mit endständiger Doppelbindung.

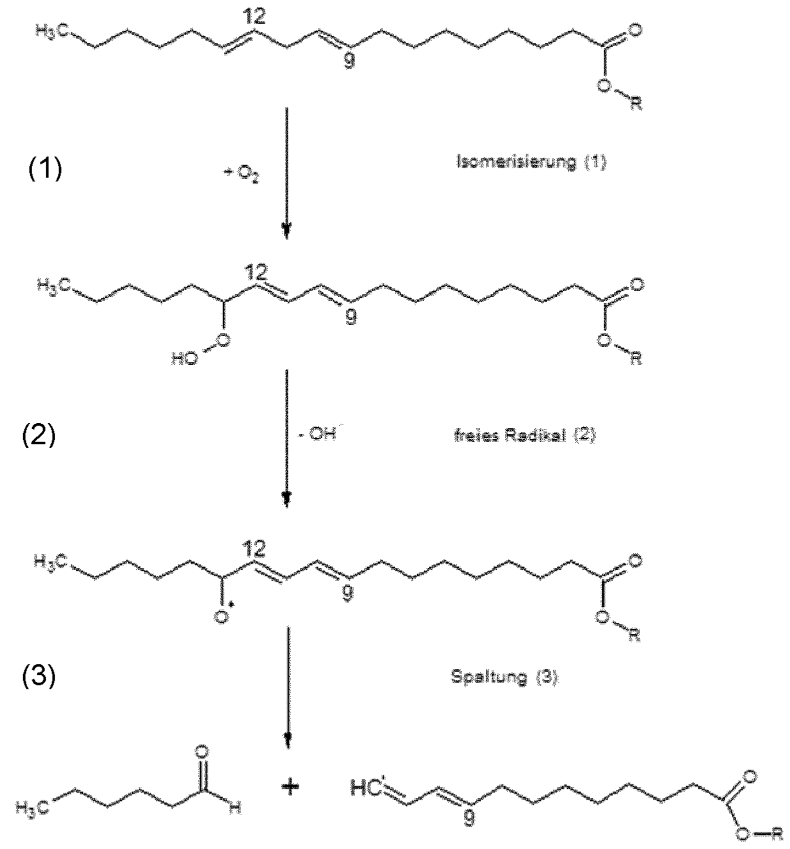


Reaktionsschema 2: Beispielhafte Darstellung der Entstehung von Spaltprodukten eines Alkydharzes anhand eines Linolsäureesters bei oxidativer Vernetzung.

Reaktionsschema 3 zeigt die Diels-Alder-Reaktion, welche im erfindungsgemäßen Korrosionsschutzmittel zwischen dem/den ersten Moleküle und dem/den zweiten Moleküle abläuft. Hierbei reagiert das Dicyclopentadien mit den als Dienophil fungierenden Doppelbindungen von Leinöl. Es ist ersichtlich, dass Diyclopentadien mit verschiedenen Doppelbindungen von Leinöl unter Bildung eines (substituierten) Norbornenringsystems reagiert. Die durch die Diels-Alder-Reaktion erhaltenen Doppelbindungen können zur oxidativen Vernetzung des Alkydharzes beitragen. Es kann davon ausgegangen werden, dass die Doppelbindung des (substituierten) Norbornenringsystems ebenfalls gegenüber der eintretenden oxidativen Spaltung der Doppelbindung empfänglich ist. Aufgrund des Vorliegens des (subsituierten) Norbornens als Bizklus kann zwar die Doppelbindung im Rahmen der oxidativen Spaltungsreaktion gespalten werden. Dies führt jedoch nicht zur Abspaltung eines kurzkettigen Aldehyds.

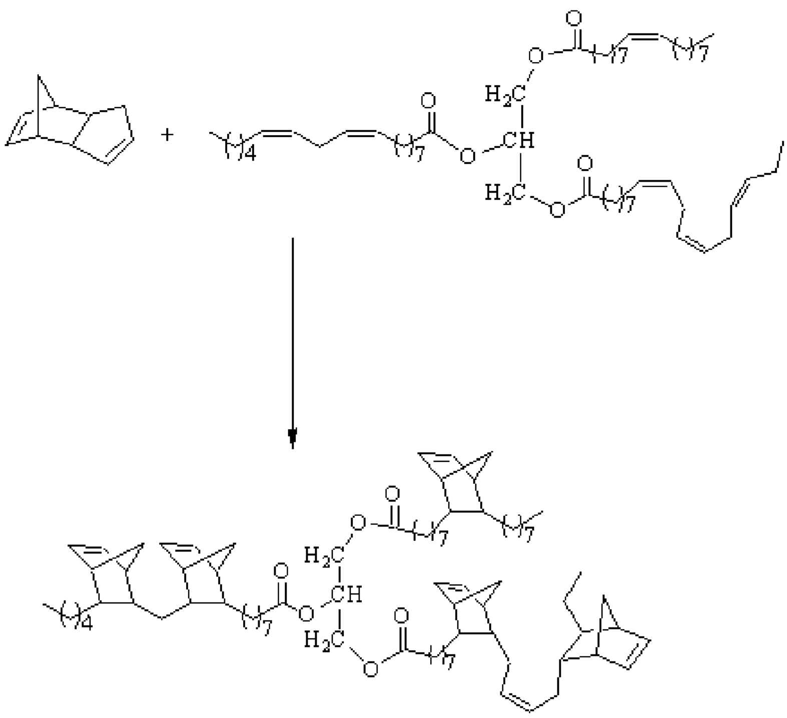

Reaktionsschema 3: Beispielhafte Umsetzung eines Alkydharzes mit Dicyclopentadien (DCPD) an einem Linolsäurerest

Das substituierte 1,3-Butadien liegt vorzugsweise in einer s-cis-Konfiguration vor.

Der Begriff "s-cis-Konfiguration" ist dem Fachmann geläufig und bezeichnet, dass die Doppelbindungen zwischen $C_1$ und $C_2$ bzw. $C_2$ und $C_3$ des substituierten 1,3-Butadiens in cis-Konfiguration bezüglich der Einfachbindung zwischen $C_2$ und $C_3$ des substituierten 1,3-Butadiens vorliegen. Das Vorliegen der s-cis-Konfiguration beinhaltet im Rahmen der vorliegenden Erfindung das überwiegend vorliegende, vorzugsweise stabile, Vorliegen des substituierten 1,3-Butadiens in der besagten s-cis-Konfiguration, d.h. dass die freie Drehbarkeit um die $C_2$-$C_3$-Einfachbindung entweder vollständig ausgeschlossen ist, beispielsweise bei Cyclopentadien (bzw. Dicyclopentadien) oder 1,3-Cyclohexadien, oder zumindest durch das Vorliegen von entsprechenden Resten/Substituenten an dem substituierten 1,3-Butadien sterisch begünstig ist.

Die s-cis-Konfiguration ist vorteilhafterweise eine planare Konfiguration, d.h. die vier Kohlenstoffatome des 1,3-Butadiens liegen in einer Ebene vor. Dem Fachmann ist jedoch klar, dass geringfügige Torsionswinkel von beispielsweise 30° oder weniger, vorzugsweise 15° oder weniger, die Reaktivität des Diens bezüglich der Reaktion mit dem Dienophil zwar erniedrigen, jedoch diese Reaktion nicht notwendigerweise unterbinden.

Als substituiertes 1,3-Butadien kann jegliches substituierte 1,3-Butadien verwendet werden. Das substituierte 1,3-Butadien weist vorzugsweise ein Molekulargewicht von mehr als 54,9 g/mol (mithin über dem Molekulargewicht von 1,3 Butadien) und 250 g/mol, mehr bevorzugt zwischen 60 g/mol und 150 g/mol, 70 g/mol und 120 g/mol, 80 g/mol und 110 g/mol bzw. 90 g/mol und 100 g/mol, auf. Durch die Verwendung vergleichsweiser kleiner Diene, d.h. Diene mit einem Molekulargewicht in den vorstehend genannten Bereichen, kann die Reaktion des Diens mit der ungesättigten Verbindung (dem Dienophil) gewährleistet werden.

Vorzugsweise ist das substituierte 1,3-Butadien eine zyklische Verbindung, mehr bevorzugt Cyclopentadien und/oder 1,3-Cyclohexadien. Cyclopentadien ist besonders bevorzugt.

Cyclopentadien liegt bei Raumtemperatur in Form des Dimers Dicyclopentadien (DCPD) vor. Bei erhöhten Temperaturen stehen beide Formen miteinander im Gleichgewicht. Die Begriffe Cyclopentadien und Dicyclopentadien sind daher im Rahmen der vorliegenden Erfindung als austauschbar anzusehen und werden entsprechend verwendet.

Cyclopentadien/Dicyclopentadien ist aufgrund der hohen Reaktivität und guten Handhabbarkeit im Rahmen der vorliegenden Erfindung besonders geeignet.

Es ist klar, dass jede zyklische Verbindung verwendet werden kann, in der das subsituierte 1,3-Butadien in s-cis-Konfiguration vorliegt. Diese zyklischen Verbindungen können weitere Substituenten bzw. Reste aufweisen, vorzugsweise an der $C_1$ oder $C_1$ und $C_4$ der 1,3-Butadienstruktur, jedoch auch an einer oder mehren beliebigen weiteren Positionen des Ringsystems.

Beispielsweise kann anstelle von Cylcopentadien bzw. Cyclohexadien subsituiertes Cylcopentadien bzw. subsituiertes Cyclohexadien verwendet werden. Hierzu wird vorzugsweise ein oder mehrere Reste mit +I-Effekt, mehr bevorzugt mit +M-Effekt, als Substituent(en) eingesetzt. Ein beispielhaftes bevorzugtes subsituiertes Cylcopentadien mit erhöhter Reaktivität im Vergleich zu unsubstituiertem Cylcopentadien ist 1-Methoxy-1,3-cyclopentadien.

Es ist bevorzugt, dass das substituierte 1,3-Butadien einen Rest aufweist, der die Elektronendichte innerhalb der konjugierten Doppelbindungen des substituierten 1,3-Butadiens erhöht, vorzugsweise wobei der Rest einen +I-Effekt oder +M-Effekt bereitstellt und an einer $C_1$-Position des substituierten 1,3-Butadiens oder an einer $C_1$-Position und $C_4$-Position des substituierten 1,3-Butadiens angeordnet ist.

Derartige, die Elektronendichte innerhalb der konjugierten Doppelbindungen des substituierten 1,3-Butadiens erhöhende Substituenten einschließlich deren Position bezüglich/innerhalb des 1,3-Butadiens sind dem Fachmann bekannt.

Bevorzugt sind hier Reste zu nennen, die einen positiven induktiven Effekt (+I-Effekt) oder einen positiven mesomeren Effekt (+M-Effekt) bewirken. Beide Effekte wirken elektronenschiebend, wodurch die Elektronendichte innerhalb der konjugierten Doppelbindungen des substituierten 1,3-Butadiens erhöht werden kann, wobei die elektronenschiebende Wirkung des +M-Effekts allgemein größer ausfällt als diejenige des +I-Effekts. Die Erhöhung der Elektronendichte innerhalb der konjugierten Doppelbindungen des substituierten 1,3-Butadiens führt zu einer erhöhten Reaktivität des Diens in der Diels-Alder-Reaktion. Dadurch kann der zeitliche Verlauf und der Umfang der Reaktion des Diens mit dem Dienophil, d.h. der Anteil der mit dem Dien umgesetzten Dienophile, gesteuert werden.

Beispielhafte Reste mit +I-Effekt beinhalten Alkylreste, beispielsweise einen Methylrest, Ethylrest, n-Proplyrest, i-Propylrest, n-Butylrest oder t-Butylrest.

Beispielhafte Reste mit +M-Effekt beinhalten einen $NH_2$-Rest, $NR_2$-Rest, OH-Rest, OR-Rest, NH(CO)R-Rest, O(CO)R-Rest, einen substituierten Arylrest, einen Phenylrest und Halogenreste, beispielsweise Brom, Chlor, Iod oder Fluor. R bzw. der Substituent des Arylrests ist hierbei vorzugsweise ein Alkylrest mit +I-Effekt, insbesondere einer der vorstehend aufgeführten Reste.

Vorzugsweise weist das Harz mehrere Doppelbindungen auf, mehr bevorzugt weist das Harz mehrere isolierte Doppelbindungen auf, und weiter bevorzugt weist das Harz mindestens eine konjugierte Doppelbindung auf. Geeignete Harze, die im Rahmen der vorliegenden Erfindung eingesetzt werden können, sind bereits weiter oben diskutiert und aufgeführt. Insbesondere Konjugensäuren, also konjugierte Fettsäuren, werden im Rahmen der vorliegenden Erfindung bevorzugt eingesetzt, wie bspw. konjugierte Linolsäuren.

Durch das Vorliegen mehrerer Doppelbindungen in der ungesättigten Verbindung kann eine ausreichende räumliche Vernetzung der Zusammensetzung vollständiger und ggf. schneller erreicht werden.

Der Begriff "isolierte Doppelbindungen" betrifft hierbei, wie dem Fachmann geläufig, Doppelbindungen, die weder in kumulierter noch konjugierter Form vorliegen und mithin durch mindestens ein $sp^3$-hybridisiertes C-Atom voneinander getrennt sind. Durch das Vorliegen isolierter Doppelbindungen kann die mehrfache Reaktionsfähigkeit des Polyesters bzw. Alkydharzes gewährleistet werden. So steht beispielsweise zu erwarten, dass bei dem Vorliegen einer kumulierten Doppelbindung diese nicht mit dem Dien als Dienophil in Reaktion tritt. Gleiches kann auf eine konjugierte Doppelbindung zutreffen, die gegebenenfalls selbst als Dien mit einer Doppelbindung eines substituierten oder unsubstituierten 1,3-Butadiens als Dienophil in Reaktion tritt. Zumindest kann davon ausgegangen werden, dass kumulierte bzw. konjugierte Doppelbindungen eine verringerte Reaktionsfähigkeit gegenüber dem Dien aufweisen.

Es ist anzumerken, dass der Fachmann die Reaktionsfähigkeit des Diens gegenüber dem Dienophil qualitativ und quantitativ mithilfe der Grenzorbitaltheorie (siehe D. I. Schuster, T. M. Weil; J. Am. Chem. Soc.,95-12 (1973), 4092-94), insbesondere der Frontier-Molecular-Orbital-Theory/FMO-Theorie, vorhersagen bzw. abschätzen kann. Mithin kann der Fachmann anhand der Struktur der eingesetzten Reaktanten vorhersagen, ob und in welcher Weise eine Diels-Alder-Reaktion auftritt. Mithin können Aussagen über die Reaktionsgeschwindigkeit der Diels-Alder-Reaktion und Aussagen darüber getroffen werden, welche Verbindung als Dien bzw. als Dienophil fungiert. Der Fachmann kann auf dieser Grundlage ohne weiteres ermitteln welches Dien mit einem gegebenen Dienophil eine Diels-Alder-Reaktion eingeht.

Zur Erhöhung der Reaktivität der einzelnen Reaktionspartner der Diels-Alder-Reaktion kann ferner eine Lewis-Säure hinzugegeben werden. Beispielhafte Lewis-Säuren, die hierfür verwendet werden können, sind $B(CH_3)_3$, $B(OH)_3$, $BF_3$, $AlCl_3$, $CO_2$, $SO_3$, $SiCl_4$ oder $BF_5$ (siehe K. N. Houk, J. Am. Chem. Soc, 95 (1973), 4094-96 und E. J. Corey et al., J. Am. Chem. Soc., 126 (2004), 13708-13713).

Im Rahmen der vorliegenden Erfindung wurde gefunden, dass durch die Verwendung einer oder mehrerer konjugierten Doppelbindungen innerhalb des ersten Moleküls die Entstehung geruchsintensiver Verbindungen, insbesondere kurzkettiger Aldehyde bzw. Carbonsäuren, insbesondere von Aldehyden bzw. Carbonsäuren mit 3 bis 9 C-Atomen, wie beispielsweise 4 bis 8 C-Atome, 5 bis 7 C-Atome, oder 6 C-Atome, teilweise, vorzugsweise vollständig, unterbunden werden kann, wodurch eine Emissionsverringerung erreicht werden kann. Hierbei ist es nicht notwendig, dass das erste Molekül im Rahmen einer Diels-Alder-Reaktion umgesetzt wird.

Es ist weiterhin klar, dass die Diels-Alder-Reaktion nicht notwendigerweise mit dem Harz, sondern auch einer Vorstufe desselben erfolgen kann. Beispielsweise kann eine ungesättigte Fettsäure mit einem doppelallylischen Wasserstoffatom vor einer Bildung eines Triglycerids einer Diels-Alder-Reaktion unterzogen werden. Im Allgemeinen ist jedoch das Durchführen einer Diels-Alder-Reaktion mit dem Harz bevorzugt.

Die Zusammensetzung kann ein Drop-Stop-Additiv aufweisen.

Bei Drop-Stop-Additiven handelt es sich um Partikel aus festen Polymeren oder Wachsen mit einem niedrigen Erweichungspunkt. Derartige Korrosionsschutzmittel mit Drop-Stop-Additiven können auf ein gewünschtes Bauteil, insbesondere Kraftfahrzeugbauteil, gesprüht, bzw. dieses eingesprüht, werden. Nach einem gegebenenfalls erfolgenden Austropfen des Korrosionsschutzmittels werden in einem weiteren Behandlungsschritt die Bauteile kurzfristig auf eine Temperatur von 50 °C bis 80 °C, vorzugsweise mindestens 55 °C erwärmt. Dieses Erwärmen führt dazu, dass sich das im Korrosionsschutzmittel dispergierte Drop-Stop-Additiv erweicht. Dadurch kommt es zu einer Gelierung/Viskositätserhöhung des Korrosionsschutzmittels, die sich dabei zu einer gelartigen Konsistenz verfestigt. Durch diese Verfestigung kann es weiteren Verarbeitungsschritten nicht mehr zu unerwünschtem Austropfen des Korrosionsschutzmittels kommen.

Vorzugsweise weist die Zusammensetzung weitere Additive, bspw. Korrosionsschutzadditive, wie beispielsweise Calciumsulfonat, Flexibilisatoren (innere Weichmacher), wie beispielsweise Mineralöl, Füllstoffe, wie beispielsweise Talkum, Kaolin, Aluminiumhydroxid, Silikate oder Calciumcarbonate, rheologische Additive, wie beispielsweise anorganische Verdicker, zum Beispiel Schichtsilikate wie Bentonite, organische oder anorganische Basen, die ebenfalls zum Korrosionsschutz beitragen, wie beispielsweise Triethylendiamin, Katalysatoren für die oxidative Härtung des Korrosionsschutzmittels, wie beispielsweise Mangansalze und weitere Inhaltsstoffe, zum Beispiel zur Verhinderung der Bildung einer Haut während des Stehenlassens, wie beispielsweise 2-Butanonoxim (MEKO), auf. Ebenso können Farbmittel, insbesondere Pigmente, in dem Korrosionsschutzmittel vorliegen.

In der vorliegenden Erfindung beziehen sich Mengenangaben in Gewichtsanteilen jeweils auf 100 Gewichtsanteile des gebrauchsfertigen Korrosionsschutzmittels, d.h. des Korrosionsschutzmittels, dem bereits alle notwendigen Bestandteile und gegebenenfalls auch Additive beigemischt wurden.

Das erste Molekül oder die ersten Moleküle und das ggf. vorhandene zweite Molekül (bzw. zweiten Moleküle) liegen vorzugsweise n einer Menge von 2 bis 20 Gewichtsanteilen, vorzugsweise von 4 bis 15 Gewichtsanteilen, bezogen auf 100 Gewichtsanteile der Zusammensetzung vor.

Die Zusammensetzung ist mit einer Nassfilmdicke von 40 μm bis 1.000 μm auf dem Bauteil aufgebracht. Vorzugsweise beträgt die Nassfilmdicke 50 μm bis 950 μm, beispielsweise 100 μm bis 900 μm, 150 μm bis 850 μm, 200 μm bis 800 μm, 250 μm bis 750 μm, 300 μm bis 700 μm, 350 μm bis 650 μm, 400 μm bis 600 μm, 450 μm bis 550 μm, oder 500 μm bis 520 μm.

Die Nassfilmdicke betrifft das gewählte Beschichtungsverfahren, bei dem die Zusammensetzung in nassem Zustand auf das Bauteil aufbracht ist und durch das gewählte Verfahren zum Aufbringen die Dicke des Films bestimmt wird. Das hat den Vorteil, dass die Dicke des Films unmittelbar bestimmt und keine vollständige Trocknung des Films abgewartet wird.

Das Auftragen kann bspw. mit einem Rakel, bspw. einem Spiralrakel der Firma BYK-Chemie, oder pneumatisch mit einer Becherpistole, z.B. SataJet®, mit einer geeigneten Düsenöffnung, bspw. 0,8 mm bis 1,2 mm, und geeignetem Zerstäuberdruck, bspw. 3,5 bar, erfolgen. Die genannte Düsenöffnung und der genannte Zerstäuberdruck sind für beliebige Nassfilmdicken im Bereich von 40 bis 1.000 μm geeignet. Die Nassfilmdicke wird hierbei über das Auftragen einer bestimmten Menge an Zusammensetzung bestimmt.

Derart applizierte Schichten werden in einem zweitstufigen Verfahren, vorzugsweise gemäß den Ausführungen in den Absätzen [0005] und [0006], für 72 h getrocknet und können anschließend einer Korrosionsprüfung unterzogen werden. Hierbei werden die korrosionsschützenden Eigenschaften der Zusammensetzung, vorzugsweise gemäß der DIN EN ISO 9227, auf verschiedenen Substraten bestimmt. Die Substrate entsprechen standardgemäß den im Automobilbau verwendeten Materialien. Als Stahlsubstrat dient beispielsweise das Q-Panel R-36 von Q-Lab Deutschland GmbH, In den Hallen 30, D-66115 Saarbrücken, Germany mit den Abmessungen 76 mm x 152 mm und einer Dicke d = 0.81 mm.

Gemäß einer Ausführungsform der vorliegenden Erfindung sind die Moleküle ohne doppelallylischen Wasserstoffatome erste Moleküle, und die mehreren Moleküle, die doppelallylische Wasserstoffatome aufweisen, zweite Moleküle, wobei das Zahlenverhältnis der ersten Moleküle zu den zweiten Molekülen mindestens 100 beträgt.

Dem Fachmann ist klar, dass die Ausdrücke "Moleküle" bzw. "erstes Molekül" austauschbar sind. So handelt es sich bei dem Molekül (den Molekülen) bzw. dem ersten Molekül (den ersten Molekülen) um die gleiche Verbindung (gleichen Verbindungen). Lediglich aus Gründen einer verbesserten Unterscheidbarkeit kann bei einer Verwendung

eines zweiten Moleküls (zweiten Molekülen) auf ein erstes Molekül (erste Moleküle) Bezug genommen werden.

Das Zahlenverhältnis der ersten Moleküle zu den zweiten Molekülen beträgt vorzugsweise mindestens 200, bspw. mindestens 300, mindestens 400, mindestens 500, mindestens $10^3$, mindestens $10^4$, mehr bevorzugt mindestens $10^5$. Durch den geringen Gehalt an zweiten Molekülen kann sichergestellt werden, dass bei der oxidativen Vernetzung geringe Emissionen/ geringe Geruchsbelästigungen entstehen.

Gemäß einer weiteren Ausführungsform der vorliegenden Erfindung ist das Harz ein modifiziertes Harz ist, wobei das modifizierte Harz eine geringere Anzahl doppelallylisches Wasserstoffatome als ein nicht-modifiziertes Harz aufweist.

Die Verringerung der Anzahl an doppelallylischen Wasserstoffatomen kann wie vorstehend erwähnt erzielt werden.

Gemäß einer Ausführungsform der vorliegenden Erfindung weist die Zusammensetzung 5 bis 20 Gew.-% des Harzes, bezogen auf 100 Gew.-% des geruchs- und emissionsreduzierten Korrosionsschutzmittels zur Hohlraumversiegelung oder zum Unterbodenschutz, auf. Vorzugsweise ist das Harz ausgewählt ist aus der Gruppe bestehend aus einem ungesättigten Polyester, einem ungesättigten Alkydharz und einem ungesättigten Bindemittel.

Gemäß einer weiteren Ausführungsform der vorliegenden Erfindung weist das Harz kein Acrylharz und/oder Epoxidharz auf.

Gemäß einer Ausführungsform der vorliegenden Erfindung weist die Zusammensetzung 2 bis 8 Gew.-%, vorzugsweise 3,5 bis 4,5 Gew.-%, eines Wachses, bezogen auf 100 Gew.-% der Zusammensetzung, auf.

Vorzugsweise ist das Wachs ausgewählt aus der Gruppe bestehend aus einem mineralischen/fossilen/natürlichen Wachs, insbesondere Paraffinwachs, einem teilsynthetischen Wachs, einem synthetischen Wachs und einem Mikrowachs.

Gemäß einer weiteren Ausführungsform der vorliegenden Erfindung weist die Zusammensetzung 40 bis 70 Gew.-%, vorzugsweise 48 bis 55 Gew.-%, eines Öls, bezogen auf 100 Gew.-% der Zusammensetzung, auf.

Vorzugsweise ist das Öl ausgewählt aus der Gruppe bestehend aus einem Mineralöl, insbesondere Mineralöle mit Schnitten von 75 bis 300. Mehr bevorzugt sind Schnitte von 100 bist 275, bspw. 125 bis 250, 150 bis 225, oder 175 bis 200.

Gemäß einer Ausführungsform der vorliegenden Erfindung kann das geruchs- und emissionsreduzierte Korrosionsschutzmittel zur Hohlraumversiegelung oder zum Unterbodenschutz nach einer Ausreaktion einer Temperatur von 70°C oder mehr für einen Zeitraum von 5 Minuten bis 2 Stunden ausgesetzt sein und/oder einer Temperatur von -15°C oder weniger für einen Zeitraum von 5 Minuten bis 2 Stunden ausgesetzt sein, ohne dass das ausreagierte, geruchs- und emissionsreduzierte Korrosionsschutzmittel feststellbare Veränderungen aufweist.

Gemäß einer weiteren Ausführungsform der vorliegenden Erfindung weist das geruchs- und emissionsreduzierte Korrosionsschutzmittel zur Hohlraumversiegelung oder zum Unterbodenschutz weniger als 100 ppm mindestens eines kurzkettigen Aldehyds und/oder mindestens einer kurzkettigen Carbonsäure auf.

Vorzugsweise weist das mindestens eine kurzkettigen Aldehyde und/oder die mindestens eine kurzkettige Carbonsäure 3 bis 9 C-Atome auf. Mehr bevorzugt wird das mindestens eine kurzkettige Aldehyd und/oder die mindestens eine kurzkettige Carbonsäure in Abhängigkeit der Zeit durch Vernetzung gebildet.

Gemäß noch einer weiteren Ausführungsform der vorliegenden Erfindung ist das mindestens eine kurzkettige Aldehyd (mit vorzugsweise 3 bis 9 C-Atomen) und/oder die mindestens eine kurzkettige Carbonsäure (mit vorzugsweise 3 bis 9 C-Atomen) in einer Konzentration von weniger als 40 ppm, vorzugsweise weniger als 25 ppm, mehr bevorzugt weniger als 20 ppm, weniger als 15 ppm, weniger als 10 ppm, weniger als 5 ppm, oder weniger als 1 ppm enthalten

Die Konzentration des mindestens einen kurzkettigen Aldehyds und/oder der mindestens eine kurzkettige Carbonsäure kann durch jedes geeignete Verfahren bestimmt werden. So können bspw. chromatographische Verfahren, insbesondere Gaschromatographie und HPLC, und/oder Massenspektroskopie zur Anwendung gelangen. Vorzugsweise wird die Konzentration des mindestens einen kurzkettigen Aldehyds und/oder der mindestens eine kurzkettige Carbonsäure gemäß den Beispielen bestimmt.

Insbesondere bevorzugt ist die Konzentration des mindestens einen kurzkettigen Aldehyds und/oder der mindestens eine kurzkettige Carbonsäure geringer als die geltende maximale Arbeitsplatzkonzentration zum Anmeldezeitpunkt oder entspricht dieser. Die maximale Arbeitsplatzkonzentration wird hierbei nach den jeweils geltenden gesetzlichen Vorgaben, bspw. der Europäischen Union, einschließlich den aufgeführten Geräten, Chemikalien, etc. bestimmt. Dadurch wird ein ausreichender Arbeitnehmerschutz sichergestellt.

Vorzugsweise wird eine Konzentration des mindestens einen kurzkettigen Aldehyds gemäß DIN ISO 16000-6:2012-11 bestimmt.

Gemäß noch einer weiteren Ausführungsform der vorliegenden Erfindung weist das geruchs- und emissionsreduzierte Korrosionsschutzmittel zur Hohlraumversiegelung oder zum Unterbodenschutz bei einem Geruchstest nach VDA 270 und/oder PV 3900 eine Bewertung von <3, vorzugsweise <2, mehr bevorzugt 1, auf. Dadurch wird sichergestellt, dass der Endverbraucher durch den Geruch des mindestens einen kurzkettigen Aldehyds und/oder der mindestens eine kurzkettige Carbonsäure lediglich geringfügig, vorzugsweise nicht, belästigt wird.

Vorzugsweise wird der Geruchstest gemäß den Beispielen durchgeführt.

Vorzugsweise handelt es sich bei dem Korrosionsschutzmittel um sogenannte Lösungsmittel enthaltende Hohlraumkonservierungen oder 100 % Hohlraumkonservierungen. Diese Hohlraumkonservierungen weisen, im Gegensatz zu den sogenannten wässrigen Hohlraumkonservierungen, kein Wasser oder lediglich einen geringen Gehalt an Wasser (bspw. weniger als 5 Gew.-% Wasser, vorzugsweise weniger als 1 Gew.-% Wasser oder weniger als weniger als 0,1 Gew.-% Wasser bezogen auf 100 Gew.-% der Zusammensetzung) auf. Die Lösungsmittel enthaltende Hohlraumkonservierung oder 100 % Hohlraumkonservierung zeichnet sich gegenüber der wässrigen Hohlraumkonservierung durch eine schnellere und gleichmäßigere Trocknung aus.

Gemäß einer Ausführungsform der vorliegenden Erfindung ist das Bauteil ein Fahrzeugbauteil. Vorzugsweise ist das Bauteil ausgewählt ist aus der Gruppe bestehend aus einem Kraftfahrzeugbauteil, Schienenfahrzeugbauteil, Nutzfahrzeugbauteil, Landmaschinenbauteil, Forstmaschinenbauteil, Baumaschinenbauteil, Luftfahrzeugbauteil oder Seefahrzeugbauteil. Mehr bevorzugt handelt es sich bei dem Bauteil um ein Kraftfahrzeugbauteil.

Im Allgemeinen kann jedes beliebige Bauteil, bzw. jeder beliebige Hohlraum bzw. Unterboden eines Kraftfahrzeugs mit dem erfindungsgemäßen Korrosionsschutzmittel versehen werden. Die Oberfläche des Bauteils kann teilweise oder vollständig mit dem Korrosionsschutzmittel versehen werden, beispielsweise können 10% oder mehr, wie beispielsweise 20% oder mehr, 30% oder mehr, 40% oder mehr, 50% oder mehr, 60% oder mehr, 70% oder mehr, 80% oder mehr, 90% oder mehr, oder 95% oder mehr, der Gesamtoberfläche des Bauteils mit dem Korrosionsschutzmittel versehen sein.

Vorzugsweise handelt es sich bei dem Bauteil um ein technisches Bauteil, das heißt ein Bauteil, dass nicht im Bauwesen Anwendung findet. Mehr bevorzugt handelt es sich um ein Kraftfahrzeugbauteil im Bereich der Hohlräume bzw. dem Unterboden.

Alternativ kann es sich bei dem Bauteil um ein metallisches Bauteil, bspw. ein Bauteil aus einer Metalllegierung, vorzugsweise Stahl, aber auch um Bauteile aus faserverstärkten Kompositmaterialien, bspw. CFK (Carbonfaser verstärkte Kunststoffe) handeln.

Ein Verfahren zur Korrosionsschutzbeschichtung eines Bauteils kann die folgenden Schritte aufweisen oder bestehen aus: (a) Aufbringen des der Zusammensetzung auf das Bauteil, und (b) Trocknen der Zusammensetzung.

Vorzugsweise, kann ein mit der Zusammensetzung versehenes oder beschichtetes Bauteil durch das erfindungsgemäße Verfahren erhalten werden.

Vorzugsweise findet nach dem Schritt (a) des Aufbringens eines Korrosionsschutzmittels auf das Bauteil, und vor dem Schritt (b) des Trocknens des Korrosionsschutzmittels, der Schritt (a1) Eindringenlassen des Korrosionsschutzmittels und gegebenenfalls (a2) Austropfenlassen überschüssigen Korrosionsschutzmittels von dem Bauteil statt.

Wie vorstehend erwähnt kann durch Verwendung eines Diels-Alder-Produkts die Emissionsentwicklung und Geruchsbelästigung sowohl beim eigentlichen Herstellungsvorgang, aber auch der fertigen Korrosionsschutzbeschichtung, verringert und ggf. vollständig vermieden werden. Dies hat den Vorteil, dass der Geruch eines fertiggestellten Kraftfahrzeugs einfacher durch den Automobilhersteller oder den Käufer in gewünschter Weise beeinflusst werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendet sind, ohne den Rahmen der vorliegenden Erfindung zu verlassen.

Die Erfindung wird im Folgenden anhand von Beispielen näher erläutert.

## Beispiel 1

Im Folgenden wird ein Verfahren zur Geruchsbeurteilung eines Korrosionsschutzmittels aufgeführt.

I. Zweck und Anwendungsbereich: Diese Methode ist in Anlehnung an VDA 270/PV 3900 entstanden und dient zur Beurteilung des Geruchsverhaltens eines Korrosionsschutzmittels, insbesondere HRK-Material, unter der Einwirkung von Temperatur.

II. Definition: Unter Geruchsverhalten wird die Bereitschaft von Stoffen verstanden, flüchtige Bestandteile abzugeben, welche zu einem wahrnehmbaren Geruch führen.

III. Prinzip: Die Bewertung des Geruchs erfolgt, nach einer Vorkonditionierung mit anschließender Temperaturbelastung, olfaktorisch durch ein ausgewähltes Geruchspanel von mindestens 3 Personen. Empfohlen wird eine Größe des Geruchspanels von 5 Personen.

IV. Eingesetzte Geräte:

- Laborrührer, z.B. IKA Rührwerk 20.n und Schrägblattrührer, 4-Flügel aus Edelstahl

- Kaltgewalztes Stahlblech oder geruchsfreie, saubere Aluminiumfolie (ca. 10 cm x 20 cm)
- Geruchsfreie, saubere Aluminiumfolie
- Aluschälchen: Konservenbehälter ø 64 mm; Type: 550028; Mat.-Nr.: 3201964; Fa. Novelis Deutschland GmbH
- Als Prüfgeräte kommen 1-Liter-Glasbehälter mit geruchsneutraler Dichtung und Deckel zum Einsatz; z.B. 1 L Einmachgläser der Fa. Leifheit (Frucht & Fun)
- Wärmekammer mit Luftumwälzung (Trockenschrank), z.B. Heraeus UT 6200

V. Durchführung:

V.1 Probenvorbereitung

a) Sprühwachse

- Probenmaterial (zähflüssige Hohlraumkonservierung) für 15 min bei 1000 $min^{-1}$ rühren
- Probenmaterial mit einem Filmziehrahmen auf ein Stahlblech oder Aluminiumfolie (10 cm x 20 cm) mit einer Nassfilmdicke von 200 $\mu$m applizieren
- Aktivierung der Proben für 5 min bei 65 °C im Trockenschrank
- Vorkonditionierung der Bleche für 7 Tage bei (23 $\pm$ 2) °C und (50 $\pm$ 5) % rel. LF.
- Von dem getrockneten Produkt (100 $\pm$ 5) mg mit einem Spatel auf ein Stück Aluminiumfolie (5 cm x 5 cm) aufbringen
- Das 5 cm x 5 cm große Stück Aluminiumfolie mit (100 $\pm$ 5) mg Produkt auf den Boden des Prüfgefäßes legen und verschließen

b) Flutwachse:

- 1 g des Probenmaterials in ein Aluschälchen (Konservenbehälter ø 64 mm) einwiegen
- Aluschälchen mit 1 g Probenmaterial auf den Boden des Prüfgefäßes stellen und verschließen

c) Rohstoffe:

- 1 g des Probenmaterials in ein Aluschälchen (Konservenbehälter ø 64 mm) einwiegen
- Aluschälchen mit 1 g Probenmaterial auf den Boden des Prüfgefäßes stellen und verschließen

V.2 Lagerbedingungen und Geruchsprüfung

Es werden jeweils alle nachfolgend aufgelisteten Prüfungen durchgeführt.
a) Sprühwachse:

Tabelle 1.1: Lagerbedingungen für Sprühwachse

| Bedingung | Temperatur in °C | Lagerbedingung | Prüfhinweis |
|---|---|---|---|
| 1 | 40 $\pm$ 2 | 2 h $\pm$ 10 min | a), b) |
| 2.1 | 40 $\pm$ 2 | 7 d $\pm$0,5 d | a), b) |
| 2.2 | 105 $\pm$ 2 | 2h $\pm$ 10 min | c) |

b) Flutwachse:

Tabelle 1.2: Lagerbedingungen für Flutwachse

| Bedingung | Temperatur in °C | Lagerbedingung | Prüfhinweis |
|---|---|---|---|
| 3 | 80 $\pm$ 2 | 2 h $\pm$ 10 min | d) |

c) Rohstoffe:

Tabelle 1.3: Lagerbedingungen für Rohstoffe

| Bedingung | Temperatur in °C | Lagerbedingung | Prüfhinweis |
|---|---|---|---|
| 1 | 40 ± 2 | 2 h ± 10 min | a), b) |
| 2.1 | 40 ± 2 | 7d + 0,5 d | a), b) |
| 3 | 80 ± 2 | 2 h ± 10 min | d) |

Prüfhinweise

- Die Geruchsbewertung erfolgt direkt nach der Entnahme des Prüfgefäßes aus dem Trockenschrank. Das Prüfgefäß wird im Anschluss wieder verschlossen
- Erneute Geruchsbewertung des Prüfgefäßes aus a) nach der Lagerung für 1 Tag bei Raumtemperatur
- Lagerung analog Bedingung 2.1 und Bewertung nach a) und b). Im Anschluss wird das Prüfgefäß wieder verschlossen und bei 105 °C (Bedingung 2.2) gelagert. Darauf folgt eine Geruchsbewertung nach der Lagerung für 7 Tage bei Raumtemperatur
- Nach der Entnahme aus dem Ofen wird das Prüfgefäß für 5 min abgekühlt und anschließend olfaktorisch bewertet

VI. Geruchsbewertung

Die Geruchsbewertung erfolgt nach der aktuellen Version der VDA 270. Bewertet werden alle möglichen Bedingungen mit denen in Tabelle 1.4 beschriebenen Noten. Die Notenvergabe erfolgt von 1 bis 6, wobei die Vergabe von halben Noten möglich ist.

Tabelle 1.4: Benotungsskala Geruchsbewertung

| Note | Beschreibung |
|---|---|
| 1 | nicht wahrnehmbar |
| 2 | wahrnehmbar, nicht störend |
| 3 | deutlich wahrnehmbar, aber noch nicht störend |
| 4 | störend |
| 5 | stark störend |
| 6 | unerträglich |

Das Ergebnis der Bestimmung des Geruchsverhaltens wird als arithmetischer Mittelwert angegeben. Die Noten werden so gerundet, dass eine Abstufung von halben Notenschritten entsteht.

**Beispiel 2**

Im Folgenden wird ein weiteres Verfahren zur Emissionsbeurteilung eines Korrosionsschutzmittels aufgeführt.

I. Zweck und Anwendungsbereich:

Diese Methode dient der Charakterisierung von Art und Menge ausgasbarer organischer Substanzen, welche aus nicht metallischen Materialien, die im Fahrzeuginnenraum Verwendung finden, bestehen. Quantifiziert werden die Einzelsubstanzen als Toluoläquivalent.

II. Prinzip:

Für die Probenahme werden die Materialien bei einer definierten Temperatur und einem definierten Fluss in

eine Mikroprüfkammer eingebracht. Hierbei findet eine thermische Extraktion der Analyten auf Tenax TA® statt. Die Analyte (Emissionen) werden im Anschluss gaschromatografisch aufgetrennt und mittels Massenspektrometer detektiert. Die erhaltenen Messwerte dieses Prüfverfahrens sind nur für die hier beschriebenen Bedingungen gültig. Die erhaltenen Ergebnisse sind nicht dazu geeignet gesundheitliche Beurteilungen der detektierten Substanzen vorzunehmen. Die Messergebnisse sind ebenfalls nicht dafür geeignet um eine Abschätzungen der Gesamtemissionen eines Fahrzeugs vorzunehmen.

III. Geräte:

- Micro-Chamber/Thermal Extractor™ (μ-CTE™); 6 Kammer Modell; Fa. Markes International
- Rotilabo®-Aluschalen mit Griff; ø 28 mm, 8 ml; Bestell-Nr. PP54.1; Fa. Carl Roth GmbH & Co. KG
- Glass tubes; ¼" x 3½"; Tenax TA; C6-C30; Conditioned & Capped; Artikel-Nr: C1-BAXX-5039; Fa. Markes International
- FlowMark™ Flowmeter; 0,5 ml/min bis 500 ml/min; Artikel-Nr.: N9307086; Fa. Perkin Elmer
- TD 100xr; Thermodesorber; Fa. Markes International
- Kühlfalle "General Purpose Hydrophobie; Artikel-Nr.: U-T2GPH-2S; QC: QQR-0145
- GCMS 2010; Fa. Shimadzu
- GCMS QP 2010; Massenspektrometer; Fa. Shimadzu
- μl-Spritze für Standardinjektion; z.B.5 μl-Spritze; Fa. SGE Analytical Science

IV. Durchführung:

IV.1. Probenvorbereitung

a) Sprühwachse:

- Probenmaterial (zähflüssige Hohlraumkonservierung) für 15 min bei 1000 $min^{-1}$ rühren
- Ca. 150 mg Probenmaterial exakt in ein Aluschälchen (Rotilabo®-Aluschalen mit Griff; ø 28 mm) einwiegen (Beschriftung der Aluschälchen durch Einritzen mittels eines spitzen Gegenstandes z.B. einer Pinzette)
- Aktivierung der Proben für 5 min bei 65 °C im Trockenschrank
- Vorkonditionierung der Aluschälchen für 7 Tage bei (23 ± 2) °C und (50 ± 5) % rel. LF.

b) Flutwachse:

- Ca. 150 mg Probenmaterial exakt in ein Aluschälchen (Rotilabo®-Aluschalen mit Griff; ø 28 mm) einwiegen (Beschriftung der Aluschälchen durch Einritzen mittels eines spitzen Gegenstandes z.B. einer Pinzette)

c) Rohstoffe:

- Probenmaterial (wenn flüssig) für 15 min bei 1000 $min^{-1}$ rühren
- Ca. 150 mg Probenmaterial exakt in ein Aluschälchen (Rotilabo®-Aluschalen mit Griff; ø 28 mm) einwiegen (Beschriftung der Aluschälchen durch Einritzen mittels eines spitzen Gegenstandes z.B. einer Pinzette)
- Evtl. Aktivierung der Proben für 5 min bei 65 °C im Trockenschrank (siehe IV.3 Prüfhinweise)
- Evtl. Vorkonditionierung der Aluschälchen für 7 Tage bei (23 ± 2) °C und (50 ± 5) % rel. LF. (siehe IV.3 Prüfhinweise)

IV.2 Probenahme

Die Probenahme erfolgt mittels Micro-Chamber/Thermal Extractor™ (μ-CTE™). Vor der Verwendung der μ-CTE™ wird diese mit Isopropanol gereinigt. Um sicherzustellen, dass das gesamte Isopropanol vor der Probenahme entfernt ist, wird die Kammer nach der Reinigung für 30 min auf die maximale Temperatur von 120 °C aufgeheizt und ein Fluss von ca. 40 ml/min eingestellt. Der Fluss wird unter Zuhilfenahme des FlowMark™ Flowmeter der Firma PerkinElmer eingestellt und überprüft. Die Probenahme erfolgt auf mit Tenax TA gefüllte Glasstubes (TD-Tubes). Diese TD-Tubes werden vor ihrem Einsatz konditioniert um Kontaminationen u.a. aus der vorangegangen Analyse zu eliminieren.

Die Konditionierung erfolgt wie in Abschnitt IV 4.4 beschrieben. Zur Probenahme werden die TD-Tubes an den Ausgang der μ-CTE™ angebracht.

Bei allen Proben muss eine Referenz als Bezugsgröße mitgemessen werden, da eine Beurteilung nur relativ zu einer mitgemessenen Probe erfolgen sollte. Die Probenahmeparameter können Tabelle bis Tabelle 2.3 entnommen werden. In der Regel wird Prüfbedingung 1 angewendet. Prüfbedingung 2 kommt nur dann zum Einsatz, wenn eine Intensivierung der (aus Bedingung 1 erhaltenen) Signale nötig ist oder es die Kundenspezifikation vorschreibt.

a) Sprühwachse:

Tabelle 2.1: Probenahmebedingungen für Sprühwachse

| Bedingung | Temperatur in °C | Fluss in ml/min | Probenahmezeit in min |
|---|---|---|---|
| 1 | + 65 2 | 40 | 30 |
| 2 | ± 90 2 | 40 | 30 |

b) Flutwachse:

Tabelle 2.2: Probenahmebedingungen für Flutwachse

| Bedingung | Temperatur in °C | Fluss in ml/min | Probenahmezeit in min |
|---|---|---|---|
| 1 | 65+2 | 40 | 30 |
| 2 | 90+2 | 40 | 30 |

c) Rohstoffe:

Tabelle 2.3: Probenahmebedingungen für Rohstoffe

| Bedingung | Temperatur in °C | Fluss in ml/min | Probenahmezeit in min | Prüfhinweise |
|---|---|---|---|---|
| 1 | 65 ± 2 | 40 | 30 | |
| 2 | 90 ± 2 | 40 | 30 | |
| 3 | 65 ± 2 | 40 | 30 | a), b) |
| 4 | 90 ± 2 | 40 | 30 | a), b) |

IV.3 Prüfhinweise

a) Aktivierung der Proben für 5 min bei 65 °C im Trockenschrank
b) Vorkonditionierung der Aluschälchen für 7 Tage bei (23 ± 2) °C und (50 ± 5) % rel. LF.

IV.4 Analytik der Proben

Die analytische Trennung der Proben erfolgt mittels Gaschromatografie (GCMS 2010). Zur Probenaufgabe wird die Thermodesorption (TD 100xr) eingesetzt. Die Detektion erfolgt mittels eines Massenspektrometers (GCMS QP 2010). Die Messung wird für alle Proben mit den in Abschnitt IV.4 Analytik der Proben, Tabellen 2.4 bis 2.10 beschriebenen Geräteparametern durchgeführt. Einmal wöchentlich muss am Gaschromatograf ein Auto-Tune durchgeführt werden, um eine optimale Detektorspannung zu gewährleisten und die Dichtigkeit des Systems zu überprüfen. Die jeweiligen Messungen müssen immer mit der aktuellen Auto-Tune Version durchgeführt werden.

IV.4.1 Thermodesorption

Zur Thermodesorption wird das Gerät TD 100xr der Firma Markes International eingesetzt. Als Kühlfalle wird die "General Purpose Hydrophobie" Kühlfalle verwendet. Sie ist für die Analyse von VOCs (flüchtige organische Verbindungen) im Bereich von C4/5 bis C30/32 ausgelegt.

Tabelle 2.4: Parameter zur Kühlfalle

| Kühlfallen-Parameter | |
|---|---|
| Maximale Arbeitstemperatur in °C | 335 |
| Typische Konditioniertemperatur in °C | 300 bis 320 |
| Typische Desorptionstemperatur in °C | 250 bis 300 |

Tabelle 2.5: Allgemeine Informationen zum Thermodesorber

| Allgemeine Informationen | |
|---|---|
| Name | Markes TD |
| Instrument | TD100-S2,TD100 Split, TD100 Trap |
| Modus | TD 100-S2.2-3 Stufenweise Desorption |
| Trägergas | Helium |
| TD100 Type | Series 2 |
| Load Temperature in °C | 50 |
| Ultra Unload Temperature in °C | 100 |

Tabelle 2.6: Allgemeine Einstellung am Thermodesorber

| Allgemeine Einstellungen | |
|---|---|
| Standby Split | Ein |
| Standby Flow in ml/min | 25 |
| Flow Path Temperature in °C | 180 |
| Overlap | Aus |
| GC-Cycle Time in min | 30 |
| Minimum Carrier Pressure in psi | 10 |

Tabelle 2.7: Einstellungen zur Vordesorption am Thermodesorber

| Vordesorption | |
|---|---|
| Standard Injection Type | Prepurge time (min) |
| Prepurge Time in min | 1 |
| Prepurge Trap in Line in min | Aus |
| Purge Trap Flow in ml/min | 50 |
| Prepurge Split | Ein |
| Prepurge Split flow in ml/min | 40 |

Tabelle 2.8: Einstellungen zur Tube Desorption am Thermodesorber

| Tube Desorption | |
|---|---|
| Desorb Time in min | 10 |
| Desorb Temperature in in °C | 280 |

(fortgesetzt)

| Tube Desorption | |
|---|---|
| Trap in Line Desorb | Ein |
| Trap Desorb Flow in ml/min | 40 |
| Desorb Split | Aus |
| Desorb Split Flow in ml/min | 50 |
| Tube Desorb 2 | Aus |
| Desorb Time 2 in min | 10 |
| Desorb Temperature 2 in °C | 250 |
| Trap in Line Desorb 2 | Ein |
| Trap Desorb Flow 2 in ml/min | 50 |
| Desorb Split 2 | Aus |
| Desorb Split Flow 2 in ml/min | 50 |

Tabelle 2.9: Einstellungen an der Kühlfalle am Thermodesorber

| Einstellungen an der Kühlfalle | |
|---|---|
| Trap Purge Time in min | 1 |
| Trap Purge Flow in ml/min | 40 |
| Trap Low Temperature in °C | 5 |
| Trap Heating Rate in °C/s | Max |
| Trap High Temperature in °C | 290 |
| Trap Desorb Time in min | 10 |
| Trap Desorb Split in ml/min | Ein |
| Trap Desorb Flow in ml/min | 20 |

IV.4.2 Chromatografie

Zur gaschromatografischen Trennung wird der GCMS 2010 der Firma Shimadzu eingesetzt. Zum Einsatz kommt eine Optima 5 MS Säule der Firma Macherey-Nagel mit einer Länge von 50,0 m, einer Dicke von 5,00 μm und einem Durchmesser von 0,32 mm oder Vergleichbares. Die Ofentemperatur beim Start beträgt 40 °C und die Äquilibrierzeit beträgt 3,00 min.

Tabelle 2.10: Temperaturprogramm Gaschromatograf

| | Rate in °C/min | Endtemperatur in °C | Haltezeit in min |
|---|---|---|---|
| 0 | - | 40 | 4,00 |
| 1 | 3,00 | 92 | 2,00 |
| 2 | 5,00 | 160 | 2,00 |
| 3 | 10,00 | 280 | 14,07 |

IV.4.3 Massenspektrometer

Das Massenspektrometer GCMS QP 2010 ist direkt mit dem Gaschromatografen verbunden und ebenfalls von der Firma Shimadzu. Es handelt sich um ein Quadrupol-MS mit einer Elektronenstoß-Ionisierungsquelle.

Tabelle 2.11: MS-Parameter

| Massenspektrometer | |
|---|---|
| Temperatur Ionenquelle in °C | 200 |
| Temperatur Interface in °C | 200 |
| Lösungsmittel cutoff in min | 5,00 |
| Threshold | 40 |
| Startzeit MS in min | 5 |
| Endzeit MS in min | 65 |
| ACQ Modus | Scan |
| Event Zeit in sec | 0,5 |
| Scangeschwindigkeit | 769 |
| Start MS-Scan bei m/z | 29 |
| Ende MS-Scan bei m/z | 400 |

IV.4.4 Konditionierung der Thermodesorptions-Tubes

Die TD-Tubes werden direkt im Thermodesorber konditioniert. Dazu werden die in Tabelle 2.12, Tabelle 2.13 und Tabelle 2.14 angegebenen Parameter angewendet.

Tabelle 2.12: Allgemeine Einstellungen zur Konditionierung von Thermodesorptions-Tubes

| Allgemeine Einstellungen | |
|---|---|
| Standby Split | Ein |
| Standby Flow in ml/min | 10 |
| Flow Path Temperature in °C | 150 |
| Minimum Carrier Pressure in psi | 5 |

Tabelle 2.131: Tube Purge Einstellungen zur Konditionierung von Thermodesorptions-Tubes

| Tube Purge | |
|---|---|
| Prepurge Time in min | 1 |
| Prepurge Split flow in ml/min | 50 |

Tabelle 2.14: Tube Desorption Einstellungen zur Konditionierung von Thermodesorptions-Tubes

| Tube Desorption | |
|---|---|
| Desorb Time in min | 10 |
| Desorb Temperature in in °C | 250 |
| Tube Desorb Split in ml/min | 50 |
| Tube Desorb 2, 3 und 4 | Aus |
| Desorb Time 2,3 und 4 in min | 10 |

(fortgesetzt)

| Tube Desorption | |
|---|---|
| Desorb Temperature 2, 3 und 4 in °C | 250 |
| Desorb Split 2, 3 und 4 in ml/min | 50 |

V.Kalibrierung

V.1 Herstellung der Kalibrierlösung

Zur Kalibrierung wird eine Kalibrierlösung von Toluol in Methanol mit einer Konzentration von 0,5 μg/μl hergestellt. Hierzu werden ca. 25 mg Toluol (p.a.) in einen 50 ml-Messkolben exakt eingewogen und mit Methanol (p.a.) bis zur Markierung aufgefüllt. Die Haltbarkeit der Lösung beträgt 3 Monate bei der Lagerung im Kühlschrank. Eine Beschriftung der Lösung mit Herstelldatum, Inhalt und Haltbarkeitsdatum muss gut sichtbar erfolgen.

V.2 Vermessung der Kalibrierlösung

Die Kalibrierlösung wird auf Raumtemperatur akklimatisiert. Zur Vermessung werden 4 μl der Kalibrierlösung mit einer μl-Pipette direkt in ein mit Tenax TA gefülltes Thermodesorptionsrohr gegeben. Die Aufgabe der Lösung erfolgt wie auf dem Thermodesorptionsrohr mittels Pfeil vorgegeben.

Im Anschluss wird das TD-Tube mit Inertgas (Helium oder Stickstoff) für eine Minute bei einem Durchfluss von etwa 1 l/min bis 3 l/min durchströmt. So wird sichergestellt, dass der Analyt durch das Tenax-TA® adsorbiert wird und der Gehalt an überschüssigem Lösungsmittel (Methanol) weitgehend reduziert wird. Die Messung erfolgt mit derselben Methode wie die Messung der Proben (siehe Abschnitt IV). Es hat eine Dreifachbestimmung zu erfolgen.

V.3 Auswertung und Berechnung des Response-Faktors

Die Auswertung erfolgt über die Fläche des Peaks. Dazu wird der Toluolpeak integriert ("link point") und die Fläche ermittelt. Dies wird für alle drei Messungen durchgeführt. Anschließend wird, unter Zuhilfenahme der ermittelten Peakflächen, der Response-Faktor wird nach Gleichung 1 berechnet:

$$R_f = \frac{\mu g\ Toluol\ (C16)}{Peakfläche} * 1000000 \qquad \text{Gleichung 1}$$

VI. Emissionsbewertung

Die Emissionsbewertung erfolgt nach der jeweiligen Fragestellung. Peaks, die in jedem Fall ausgewertet werden müssen, sind Aldehyde und Carbonsäuren. Ebenfalls wird der Gesamtgehalt an organischen Verbindungen über das gesamte Chromatogramm (TVOC) ausgewertet. Die Angabe der Emissionswerte erfolgt jeweils als Toluoläquivalent in μg/g Einwaage. Toluoläqivalente werden durch die Zuhilfenahme der Peakflächen und einer vorherigen Kalibrierung (siehe Abschnitt 0) berechnet. Eine Bewertung der jeweiligen Proben erfolgt immer relativ zu einer mitgemessenen Referenzprobe. Zur Berechnung der Emissionswerte wird Gleichung 2 verwendet. Der Response-Faktor (Rf - Wert) berechnet sich aus der Kalibration (siehe Abschnitt 0).

$$Emission\ \left[\frac{\mu g}{g}\right] = R_f * \frac{Peakfläche\ [counts]}{1000 * Probeneinwaage\ [mg]} \qquad \text{Gleichung 2}$$

**Beispiel 3:**

Drei beispielhafte 100% Hohlraumkonservierungsmittel (HRK) weisen die in nachstehender Tabelle 3.1 aufgeführten Bestandteile in Gew.-% auf:

Hierbei ist "100 % HRK" ein herkömmliches Hohlraumkonservierungsmittel, bei dem als Alkydharz Sojabohnenöl verwendet wird. 100 % HRK 1 und 100% HRK 2 zeigen Ergebnisse für ein erfindungsgemäßes Hohlraumkonservierungsmittel, bei dem einmal das Sojabohnenöl vorab mit Cyclopentadien in einer Diels-Alder-Reaktion umgesetzt

wurde (100 % HRK 1), bzw. bei dem ein Alkydharz mit vorwiegend konjugierten Dopplebindungen eingesetzt wurde (100 % HRK 2).

Tabelle 3.1: Zusammensetzungen der getesteten Hohlraumkonservierungsmittel

| **CAS Nr.** | **Handelsname** | **Funktionalität** | **100 % HRK** | **100 % HRK 1** | **100 % HRK 2** |
|---|---|---|---|---|---|
| 64742-55-8 | Mineralöl Schnitt 75 | Mineralöl | 5,00 | 5,00 | 5,00 |
| 64742-54-7 | Mineralöl Schnitt 300 | Mineralöl | 46,00 | 46,00 | 46,00 |
| 68584-23-6, oder 70024-69-0 | Calcium-Sulfonat | Korrosionsschutzadditiv | 21,00 | 21,00 | 21,00 |
| 68333-62-0 | Sojabohnenöl Alkydharz | Bindemittel | 10,00 | - | - |
| 68512-80-1 | Modifiziertes Sojabohnenöl Alkydharz | Bindemittel | - | 10,00 | - |
| | Alkydharz mit vorwiegend konjugierten Doppelbindungen | Bindemittel | - | - | 10,00 |
| 96-29-7 | MEKO | Hautverhinderer | 0,15 | 0,15 | 0,15 |
| 136-52-7 | Cobalt bis(2-hexylethanoat) | Trockner | 0,10 | 0,10 | 0,10 |
| 89749-78-0 | Bentone sd 1 | Schichtsilikat | 0,25 | 0,25 | 0,25 |
| 471-34-1 | Gefälltes CaCO3 | Füllstoff | 13,50 | 13,50 | 13,50 |
| 8002-74-2 | Paraffinwachs | Wachs | 4,00 | 4,00 | 4,00 |

**Beispiel 4:**

Ergebnisse der Geruchsbestimmung 100 % HRK, 100 % HRK 1 und 100 % HRK 2 aus Beispiel 3 nach den Bestimmungsverfahren nach Beispiel 1 (Tabelle 4.1) und Beispiel 2 (Tabelle 4.2).

Tabelle 4.1: Geruchsbestimmung nach Beispiel 1

| **Geruch in Anlehnung an VDA 270** | **100 % HRK** | **100 % HRK 1** | **100 % HRK 2** |
|---|---|---|---|
| Geruchsnote:2 h/ 40 °C | 3,5 | 2,5 | 3,0 |
| Geruchsnote:2 h/ 40 °C + 1 d RT | 3,5 | 3 | 3 |
| Geruchsnote:7 d/40 °C | 4,5 | 3 | 4 |
| Geruchsnote:7 d/40 °C + 1 d RT | 4 | 3,0 | 3,0 |
| Geruchsnote:7 d/40 °C + 1 d RT + 2 h/105 °C + 7 d RT | 3,5 | 3 | 3 |

Tabelle 4.2: Geruchsbestimmung nach Beispiel 2

| **Emissionsbestimmung in Anlehnung an DIN 16000-6** | **100 % HRK** | **100 % HRK 1** | **Reduktion in %** | **100 % HRK 2** | **Reduktion in %** |
|---|---|---|---|---|---|
| Pentanal in µg/g | 5,77 | 1,97 | 65,93 | 2,35 | 59,27 |
| Hexanal in µg/g | 31,77 | 10,36 | 67,39 | 15,29 | 51,87 |
| Heptanal in µg/g | 16,32 | 0,56 | 96,54 | 2,10 | 87,13 |
| Octanal in µg/g | 8,66 | 0,53 | 93,85 | 1,25 | 85,57 |
| Nonanal in µg/g | 1,95 | 0,79 | 59,46 | 0,98 | 49,74 |

Aus der Tabelle 4.1 und insbesondere Tabelle 4.2 kann entnommen werden, dass durch den Einsatz des erfindungsgemäßen Korrosionsschutzmittels eine teils erhebliche Geruchs- und Emissionsverringerung auftritt, die auf

einer verringerten Bildung kurzkettiger Aldehyde beruht.

**Patentansprüche**

1. Verwendung einer Zusammensetzung zur Herstellung eines geruchs- und emissionsreduzierten Korrosionsschutzmittels zur Hohlraumversiegelung oder zum Unterbodenschutz eines Kraftfahrzeugbauteils,wobei die Zusammensetzung 5 bis 20 Gew.-% eines Harzes, bezogen auf 100 Gew.-% des geruchs- und emissionsreduzierten Korrosionsschutzmittels zur Hohlraumversiegelung oder zum Unterbodenschutz, aufweist,

   wobei das Harz mehrere Moleküle aufweist, wobei die mehreren Moleküle erste Moleküle ohne doppelallylische Wasserstoffatome und zweite Moleküle mit doppelallylischen Wasserstoffatomen aufweisen, wobei ein Zahlenverhältnis der ersten Moleküle zu den zweiten Molekülen mindestens $10^3$ beträgt,
   wobei die ersten Moleküle ohne doppelallylische Wasserstoffatome erste mehrfach ungesättigte Alkydharze ohne doppelallylische Wasserstoffatome sind,
   wobei die zweiten Moleküle mit doppelallylischen Wasserstoffatomen ein Alkydharz mit doppelallylischen Wasserstoffatomen sind, wobei das Alkydharz mit doppelallylischen Wasserstoffatomen mit einem substituierten oder unsubstituierten 1,3-Butadien unter Bildung eines Diels-Alder-Produkts umgesetzt ist,
   wobei das Harz im Rahmen einer oxidativen Vernetzungsreaktion aushärtet, und
   wobei die Zusammensetzung mit einer Nassfilmdicke von 40 $\mu$m bis 1.000 $\mu$m auf dem Kraftfahrzeugbauteil aufgebracht ist.

2. Verwendung nach Anspruch 1, wobei das Harz ein modifiziertes Harz ist, wobei das modifizierte Harz eine geringere Anzahl doppelallylischer Wasserstoffatome als ein nicht-modifiziertes Harz aufweist.

3. Verwendung nach einem der vorstehenden Ansprüche, wobei das Harz kein Acrylatharz und/oder Epoxidharz aufweist.

4. Verwendung nach einem der vorstehenden Ansprüche, wobei die Zusammensetzung 2 bis 8 Gew.-%, vorzugsweise 3,5 bis 4,5 Gew.-%, eines Wachses, bezogen auf 100 Gew.-% der Zusammensetzung, aufweist, vorzugsweise wobei das Wachs ausgewählt ist aus der Gruppe bestehend aus einem mineralischen/fossilen/natürlichen Wachs, insbesondere Paraffinwachs, einem teilsynthetischen Wachs, einem synthetischen Wachs und einem Mikrowachs.

5. Verwendung nach einem der vorstehenden Ansprüche, wobei die Zusammensetzung 40 bis 70 Gew.-%, vorzugsweise 48 bis 55 Gew.-%, eines Öls, bezogen auf 100 Gew.-% der Zusammensetzung, aufweist, vorzugsweise wobei das Öl ausgewählt ist aus der Gruppe bestehend aus einem Mineralöl.

6. Verwendung nach einem der vorstehenden Ansprüche, wobei das geruchs- und emissionsreduzierte Korrosionsschutzmittel zur Hohlraumversiegelung oder zum Unterbodenschutz nach einer Ausreaktion einer Temperatur von 70°C oder mehr für einen Zeitraum von 5 Minuten bis 2 Stunden ausgesetzt sein kann und/oder einer Temperatur von -15°C oder weniger für einen Zeitraum von 5 Minuten bis 2 Stunden ausgesetzt sein kann, ohne dass das ausreagierte, geruchs- und emissionsreduzierte Korrosionsschutzmittel feststellbare Veränderungen aufweist.

7. Verwendung nach einem der vorstehenden Ansprüche, wobei das geruchs- und emissionsreduzierte Korrosionsschutzmittel zur Hohlraumversiegelung oder zum Unterbodenschutz weniger als 100 ppm mindestens eines kurzkettigen Aldehyds und/oder mindestens einer kurzkettigen Carbonsäure aufweist, vorzugsweise wobei das mindestens eine kurzkettigen Aldehyde und/oder die mindestens eine kurzkettige Carbonsäure 3 bis 9 C-Atome aufweisen, mehr bevorzugt wobei das mindestens eine kurzkettige Aldehyd und/oder die mindestens eine kurzkettige Carbonsäure in Abhängigkeit der Zeit durch Vernetzung gebildet wird.

8. Verwendung nach Anspruch 9, vorzugsweise wobei das mindestens eine kurzkettige Aldehyd mit 3 bis 9 C-Atomen und/oder die mindestens eine kurzkettige Carbonsäure in einer Konzentration von weniger als 40 ppm, vorzugsweise weniger als 25 ppm, enthalten sind.

9. Verwendung nach einem der vorstehenden Ansprüche, wobei das geruchs- und emissionsreduzierte Korrosionsschutzmittel zur Hohlraumversiegelung oder zum Unterbodenschutz bei einem Geruchstest nach VDA 270 und/oder PV 3900 eine Bewertung von <3, vorzugsweise <2, mehr bevorzugt 1, aufweist.

## Claims

1. Use of a composition for the preparation of an odor- and emission-reduced anti-corrosion agent for cavity sealing or underbody protection of a motor vehicle component, wherein the composition comprises 5 to 20 % by weight of a resin, based on 100 % by weight of the odor- and emission-reduced anti-corrosion agent for cavity sealing or underbody protection,

   wherein the resin comprises a plurality of molecules, the plurality of molecules comprising first molecules without double-allylic hydrogen atoms and second molecules with double-allylic hydrogen atoms, wherein a numerical ratio of the first molecules to the second molecules is at least $10^3$,
   wherein the first molecules without double-allylic hydrogen atoms are first polyunsaturated alkyd resins without double-allylic hydrogen atoms,
   wherein the second molecules with double-allylic hydrogen atoms are an alkyd resin with double-allylic hydrogen atoms, wherein the alkyd resin with double-allylic hydrogen atoms is reacted with a substituted or unsubstituted 1,3-butadiene to form a Diels-Alder product,
   wherein the resin cures in an oxidative crosslinking reaction, and
   wherein the composition is applied to the motor vehicle component with a wet film thickness of 40 $\mu$m to 1,000 $\mu$m.

2. The use according to claim 1, wherein the resin is a modified resin, wherein the modified resin has a lower number of double-allylic hydrogen atoms than a non-modified resin.

3. The use according to any one of the preceding claims, wherein the resin does not comprise an acrylate resin and/or an epoxy resin.

4. The use according to any one of the preceding claims, wherein the composition comprises 2 to 8 % by weight, preferably 3.5 to 4.5 % by weight, of a wax, based on 100 % by weight of the composition, preferably wherein the wax is selected from the group consisting of a mineral/fossil/natural wax, in particular paraffin wax, a semi-synthetic wax, a synthetic wax and a micro wax.

5. The use according to any one of the preceding claims, wherein the composition comprises 40 to 70 % by weight, preferably 48 to 55 % by weight, of an oil, based on 100 % by weight of the composition, preferably wherein the oil is selected from the group consisting of a mineral oil.

6. The use according to one of the preceding claims, wherein the odor- and emission-reduced anti-corrosion agent for cavity sealing or underbody protection can be exposed to a temperature of 70°C or more for a period of 5 minutes to 2 hours after a reaction and/or can be exposed to a temperature of -15°C or less for a period of 5 minutes to 2 hours without the reacted, odor- and emission-reduced anti-corrosion agent exhibiting detectable changes.

7. The use according to one of the preceding claims, wherein the odor- and emission-reduced anti-corrosion agent for cavity sealing or underbody protection has less than 100 ppm of at least one short-chain aldehyde and/or at least one short-chain carboxylic acid, preferably wherein the at least one short-chain aldehyde and/or the at least one short-chain carboxylic acid has 3 to 9 carbon atoms, more preferably wherein the at least one short-chain aldehyde and/or the at least one short-chain carboxylic acid is formed as a function of time by crosslinking.

8. The use according to claim 9, preferably wherein the at least one short-chain aldehyde having 3 to 9 carbon atoms and/or the at least one short-chain carboxylic acid are present in a concentration of less than 40 ppm, preferably less than 25 ppm.

9. The use according to one of the preceding claims, wherein the odor- and emission-reduced anti-corrosion agent for cavity sealing or underbody protection has a rating of <3, preferably <2, more preferably 1, in an odor test according to VDA 270 and/or PV 3900.

## Revendications

1. Utilisation d’une composition destinée à la production d’un agent anticorrrosion à odeurs et émissions réduites destiné au scellement de cavités ou à la protection de bas de caisse d’un composant de véhicule automobile, la composition comportant 5 à 20 % en poids d’une résine, par rapport à 100 % en poids de l’agent anticorrrosion à

odeurs et émissions réduites destiné au scellement de cavités ou à la protection de bas de caisse, dans laquelle la résine comporte plusieurs molécules, les plusieurs molécules comportant des premières molécules sans atomes d'hydrogène doublement allyliques et des deuxièmes molécules comportant des atomes d'hydrogène doublement allyliques, un rapport en poids des premières molécules aux deuxièmes molécules valant au moins $10^3$. dans laquelle les premières molécules sans atomes d'hydrogène doublement allyliques sont des premières résines alkyde plusieurs fois insaturées sans atomes d'hydrogène doublement allyliques,

dans laquelle les deuxièmes molécules comportant des atomes d'hydrogène doublement allyliques sont une résine alkyde comportant des atomes d'hydrogène doublement allyliques, dans laquelle la résine alkyde comportant des atomes d'hydrogène doublement allyliques est mise en réaction avec un 1,3-butadiène substitué ou non substitué, avec formation d'un produit de Diels-Alder,
dans laquelle la résine est durcie dans le cadre d'une réaction de réticulation par voie d'oxydation, et
dans laquelle la composition est appliquée en une épaisseur de feuil humide de 40 $\mu$m à 1 000 $\mu$m sur le composant de véhicule automobile.

**2.** Utilisation selon la revendication 1, dans laquelle la résine est une résine modifiée, la résine modifiée comportant un plus faible nombre d'atomes d'hydrogène doublement allyliques qu'une résine non modifiée.

**3.** Utilisation selon l'une quelconque des revendications précédentes, dans laquelle la résine ne comporte aucune résine acrylate et/ou résine époxydique.

**4.** Utilisation selon l'une quelconque des revendications précédentes, dans laquelle la composition comporte 2 à 8 % en poids, de préférence 3,5 à 4,5 % en poids, d'une cire, par rapport à 100 % en poids de la composition, de préférence la cire étant choisie dans le groupe constitué par une cire mnérale/fosssile/naturelle, en particulier la cire de paraffine, une cire semi-synthétique, une cire synthétique et une microcire.

**5.** Utilisation selon l'une quelconque des revendications précédentes, dans laquelle la composition comporte 40 à 70 % en poids, de préférence 48 à 55 % en poids, d'une huile, par rapport à 100 % en poids de la composition, de préférence l'huile étant choisie dans le groupe constitué par une huile minérale.

**6.** Utilisation selon l'une quelconque des revendications précédentes, dans laquelle après une réaction complète l'agent anticorrrosion à odeurs et émissions réduites destiné au scellement de cavités ou à la protection de bas de caisse peut être exposé à une température de 70 °C ou plus pendant une durée de 5 minutes à 2 heures et/ou à une température de -15 °C ou moins pendant une durée de 5 minutes à 2 heures, sans que l'agent anticorrrosion à odeurs et émissions réduites ayant totalement réagi ne présente d'altérations détectables.

**7.** Utilisation selon l'une quelconque des revendications précédentes, dans laquelle l'agent anticorrrosion à odeurs et émissions réduites destiné au scellement de cavités ou à la protection de bas de caisse comporte moins de 100 ppm d'au moins un aldéhyde à courte chaîne et/ou d'au moins un acide carboxylique à courte chaîne, de préférence dans laquelle ledit au moins un aldéhyde à courte chaîne et/ou ledit au moins un acide carboxylique à courte chaîne a/ont de 3 à 9 atomes de carbone, plus préférablement ledit au moins un aldéhyde à courte chaîne et/ou ledit au moins un acide carboxylique à courte chaîne est/sont formé(s) par réticulation en fonction du temps.

**8.** Utilisation selon la revendication 9, de préférence dans laquelle ledit au moins un aldéhyde à courte chaîne ayant de 3 à 9 atomes de carbone et/ou ledit au moins un acide carboxylique à courte chaîne est/sont contenu(s) à une concentration de moins de 40 ppm, de préférence moins de 25 ppm.

**9.** Utilisation selon l'une quelconque des revendications précédentes, dans laquelle l'agent anticorrrosion à odeurs et émissions réduites destiné au scellement de cavités ou à la protection de bas de caisse présente dans un test d'odeurs selon CDA 270 et/ou PV 3900 une évaluation de $< 3$, de préférence $< 2$, plus préférablement 1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20140037572 A1
- US 8802801 B1
- WO 9847855 A
- GB 961029 A
- CA 751514 A
- BE 664018 A


### In der Beschreibung aufgeführte Nicht-Patentliteratur


- Römpp Chemie Lexikon. Georg Thieme Verlag, 1989
- **D. I. SCHUSTER ; T. M. WEIL.** *J. Am. Chem. Soc.,* 1973, vol. 95-12, 4092-94
- **K. N. HOUK.** *J. Am. Chem. Soc,* 1973, vol. 95, 4094-96
- **E. J. COREY et al.** *J. Am. Chem. Soc.,* 2004, vol. 126, 13708-13713
- *CHEMICAL ABSTRACTS,* 64742-55-8
- *CHEMICAL ABSTRACTS,* 64742-54-7
- *CHEMICAL ABSTRACTS,* 68584-23-6
- *CHEMICAL ABSTRACTS,* 70024-69-0
- *CHEMICAL ABSTRACTS,* 68333-62-0
- *CHEMICAL ABSTRACTS,* 68512-80-1
- *CHEMICAL ABSTRACTS,* 136-52-7
- *CHEMICAL ABSTRACTS,* 89749-78-0
- *CHEMICAL ABSTRACTS,* 471-34-1
- *CHEMICAL ABSTRACTS,* 8002-74-2